Europäisches Patentamt

European Patent Office

Office européen des brevets

(19)

(11) **EP 1 172 963 A2**

(12) **EUROPEAN PATENT APPLICATION**

(43) Date of publication:
16.01.2002 Bulletin 2002/03

(51) Int Cl.⁷: $H04L\ 9/06$

(21) Application number: 01302883.2

(22) Date of filing: 28.03.2001

(84) Designated Contracting States:
AT BE CH CY DE DK ES FI FR GB GR IE IT LI LU
MC NL PT SE TR
Designated Extension States:
AL LT LV MK RO SI

(30) Priority: 13.07.2000 JP 2000212813
13.07.2000 JP 2000212814

(71) Applicant: FUJITSU LIMITED
Kawasaki-shi, Kanagawa 211-8588 (JP)

(72) Inventors:
• Shimoyama, Takeshi, c/o Fujitsu Limited
Kawasaki-shi, Kanagawa 211-8588 (JP)
• Ito, Koichi, c/o Fujitsu Limited
Kawasaki-shi, Kanagawa 211-8588 (JP)

• Takenaka, Masahiko, c/o Fujitsu Limited
Kawasaki-shi, Kanagawa 211-8588 (JP)
• Torii, Naoya, c/o Fujitsu Limited
Kawasaki-shi, Kanagawa 211-8588 (JP)
• Yajima, Jun, c/o Fujitsu Limited
Kawasaki-shi, Kanagawa 211-8588 (JP)
• Yanami, Hitoshi, c/o Fujitsu Limited
Kawasaki-shi, Kanagawa 211-8588 (JP)
• Yokoyama, Kazuhiro, c/o Fujitsu Limited
Kawasaki-shi, Kanagawa 211-8588 (JP)

(74) Representative: Mohun, Stephen John
Haseltine Lake & Co., Imperial House, 15-19
Kingsway
London WC2B 6UD (GB)

(54) **Computing apparatus using an SPN structure in an F function and a computation method thereof**

(57)    By providing a unit receiving the input of a set T of bit numbers that are obtained by unequally dividing all the bit numbers of input data to be given to a computing apparatus, a unit outputting a value $A_T$ indicating an existence probability of an appropriate linear converting unit corresponding to a plurality of S boxes of which the input and output bit numbers are equivalent to the divided bit numbers, a unit determining that an appropriate linear converting unit is present when the value of $A_T$ is positive, and a unit forming a pseudo MDS matrix as the linear converting unit, computation is executed using a unit with an excellent data diffusion performance as the linear converting unit in SPN structure, when the input number is not the same as the output number among a plurality of S boxes of the SPN structure in an F function.

```
                    COMPUTING APPARATUS        1
  ┌─────────────────────────────────────┐
  │  ┌───────────────────────────────┐ 2│
  │  │ SET OF BIT NUMBERS INPUTTING UNIT│
  │  └───────────────────────────────┘  │
  │                 │                    │
  │  ┌───────────────────────────────┐ 3│
  │  │    VALUE INDICATING EXISTENCE  │  │
  │  │ PROBABILITY OF LINEAR CONVERTING│ │
  │  │      UNIT OUTPUTTING UNIT       │  │
  │  └───────────────────────────────┘  │
  │                 │                    │
  │  ┌───────────────────────────────┐ 4│
  │  │   LINEAR CONVERTING UNIT EXISTENCE│
  │  │       DETERMINING UNIT          │  │
  │  └───────────────────────────────┘  │
  │                 │                    │
  │  ┌───────────────────────────────┐ 5│
  │  │  PSEUDO MDS MATRIX FORMING UNIT │  │
  │  └───────────────────────────────┘  │
  └─────────────────────────────────────┘
```

FIG. 2A

## Description

The present invention relates to a common key block encryption method, and apparatus. In particular, the present invention relates to an encrypting apparatus and also encryption method that form a linear converting unit with an effective data diffusion performance as a linear converting unit to be provided behind a plurality of S boxes, in the case that the input/output bit numbers of a plurality of S boxes, that are used in the F function of the structure called Feistel structure, are not the same among the plurality of S boxes.

Furthermore, the present invention relates to an encryption apparatus and encryption method of enhancing the data diffusion performance by combining the Feistel structure and SPN structure and performing a specified device for the SPN structure.

Advancements in information technology have bought about a need for improved security of information. The basis of information security resides in the encryption of common key block cipher as an indispensable technology, to realize high-speed and secure communication in an advanced information-led society. As for the algorithm of this common key block cipher, various methods are proposed, for example, depending on the applied field. **One such proposal** — is the algorithm of the simple repetition structure called Feistel structure.

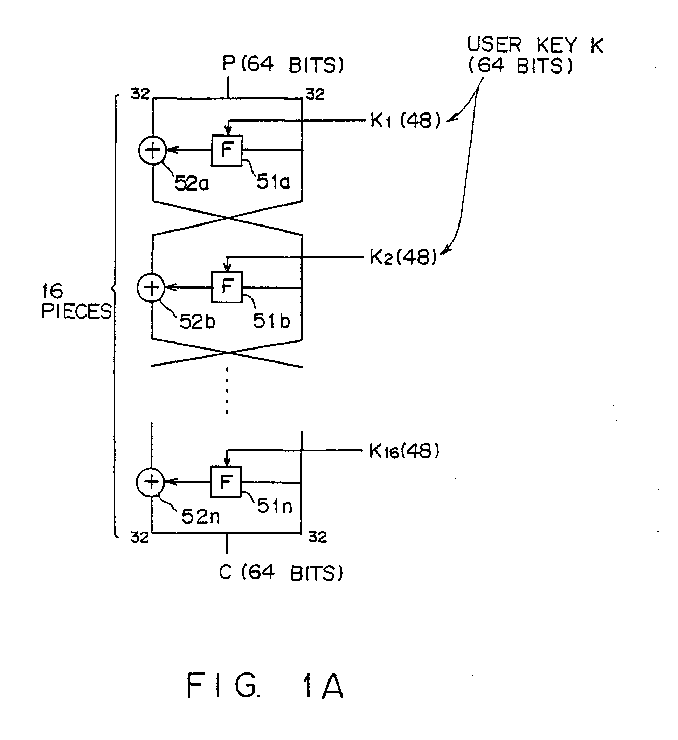

Figure 1A is an explanatory diagram of a DES encryption method in which sixteen pieces of the Feistel structure are repeated. In this figure, an input P, for example, 64 bits are divided into the right-side 32 bits and the left-side 32 bits. The right-side 32 bits are input to a nonlinear function called F function 51 (51a, 51b, ..., 51n). The exclusive OR between the output and the left-side 32 bits is computed by an XOR52. The result is given to the next piece of the structure as the right-side 32 bits. The right-side 32 bits of the input 64 bits are directly given to the left-side 32 bits of the next piece.

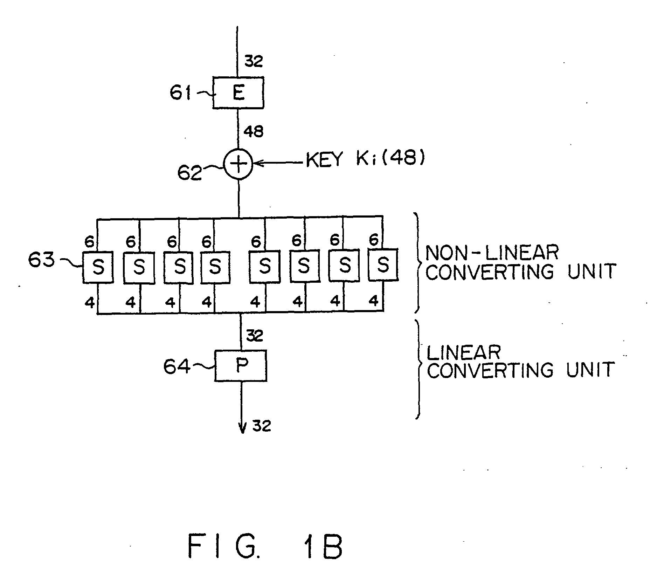

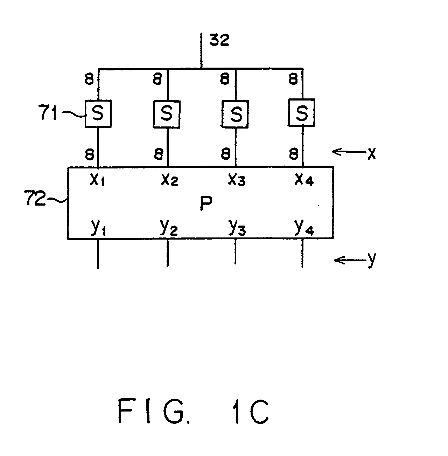

Figure 1B shows a configuration example of the F function 51 (51a, 51b, ..., 51n) shown in Figure 1A. An input, for example, 32 bits are expanded to 48 bits by a bit expanding unit E61. The exclusive OR between the 48 bits and key $K_i$ 48 bits is computed by an XOR62. The output is divided for each 6 bits, and each thus-divided output is input to a nonlinear function called S box. The output of each S box 63 is set to 4 bits. Total 32 bits are input to a linear function P64, and the diffusion of data is carried out. Such a structure is generally called SPN (substitution permission network) structure.

The S box is used to obtain the nonlinear stirring output of the encrypting apparatus, and the linear function P that is carried out subsequently the S box is used to diffuse the local nonlinear output using the S box for the whole data. However, such research of which is a linear conversion with an excellent diffusion performance when the conversion is incorporated into the encrypting apparatus, or how concretely the conversion is obtained, has been conventionally carried out. Generally, as for the linear conversion that is used for the cipher, it is desirable that the output of one S box is related to the input of S boxes as much as possible in the next stage. At present, as for the more expanded linear function, the function that satisfies the following property deems to be proper: That is, in the case where an input X and an output Y of a linear conversion P is divided in units of s bits or t blocks $X=(x_1, ... x_t)$, $Y=(y_1, ..., y_t)$, (each $x_i$, and $y_i$ are s bits) regarding the input/output number s of the S box, equal to or more than t+1 variables are included (=coefficient is not 0) in an optional linear relational equation $f(x_1, .., x_t, y_1, ..., y_t)=0$ that is realized between the input and output of Y=P (X), among 2t variables obtained by adding the inputs $x_i$ and outputs $y_i$.

The MDS conversion process is known as linear conversion P that satisfies such a property. This conversion is a process making to the maximum, the branch number that is the concept to be used for the definition of the diffusion property of the data diffusion in the linear conversion P. This branch number is a parameter that evaluates the strength to differential attack or linear attack to the cipher. The detail is explained in the following article:

Article) Document regarding the selection/design/evaluation of a common key block cipher,... Communication/ Broadcast Mechanism, 5.7.3 "Structure for Assuring a Large Branch Number", p109-

Figure 1C is an explanatory diagram of the linear function P that realizes the MDS conversion. In the same figure, each input and output to/from four S boxes 71 are 8 bits. Total 32 bits are given to the linear function P as input x. The input x and output y to/from the linear function P are set to variables $x_i$ (i=1 to 4) and $y_j$ (j=1 to 4), respectively, that are divided for each 8 bits corresponding to the S box.

When input differential $\Delta x_i$ is given to $x_i$, the set of i is written as follows, and this set is named input active S box.

$$\{i \mid \Delta x_i \neq 0\}$$

When the input differential is given to, for example, $x_1$ and $x_2$, this set becomes {1,2}.

The next set is named output active S box, corresponding to $y_j$ where output differential $\Delta y_j$ generates in accordance with this input active S box.

$$\{j \mid \Delta y_j \neq 0\}$$

The sum set $\{i \mid \Delta x_i \neq 0\} \cup \{j \mid \Delta y_j \neq 0\}$ of these two sets is named an active S box.

The minimum value of the number of elements acts (P) of this set active S box is decided by the linear conversion P. The minimum value min(actS (P)) of the number of elements of the active S box is named the number of active S boxes. The maximum value of the number of this active S boxes is assumed to agree with the number (t+1) of the variables that are included in the above-mentioned linear relational equation. If the linear conversion P of which the maximum value of the number of elements of the active S box is, for example, 5 is present, when one of the inputs $x_i$ (i=1 to 4) change, four outputs $y_j$ (j=1 to 4) accordingly change. Further, one output is influenced by the five inputs.

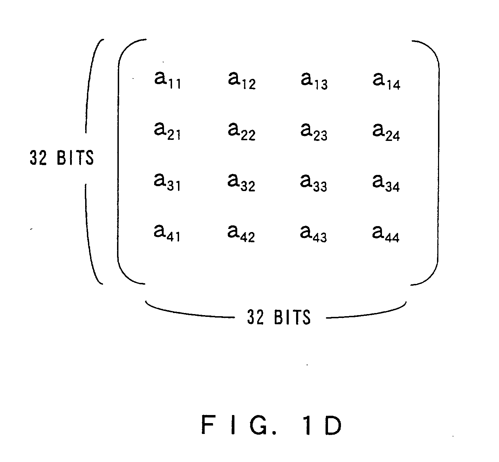

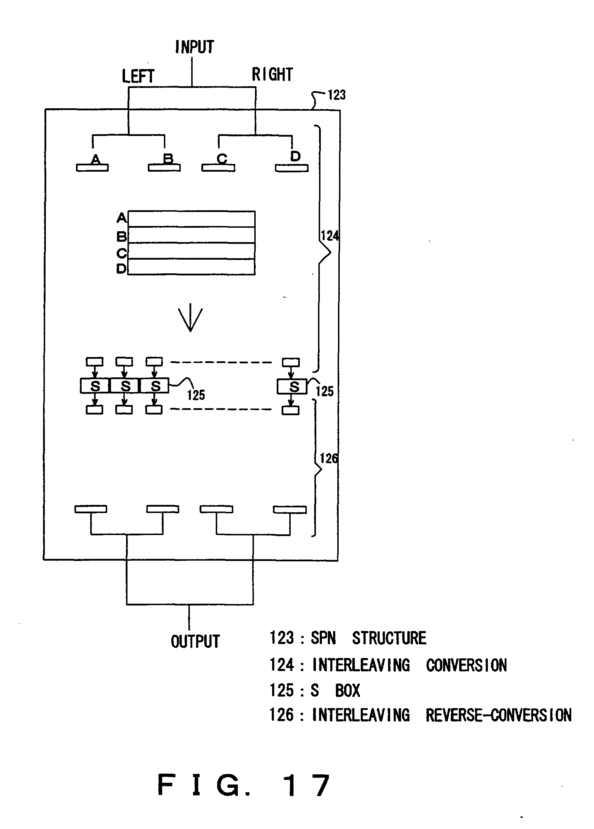

Figure 1D is an explanatory diagram of the MDS matrix equivalent to such MDS conversion. In the same figure, the MDS matrix is composed of eight columns, and eight rows of partial matrix $a_{ij}$ (i=1 to 4, j=1 to 4) that consists of element 0 or 1. The numbers of columns and rows of this $a_{ij}$ matrix correspond to the numbers of input/output bits of the S box 71 explained in Figure 17, respectively.

Next, the property of such an MDS matrix is explained. In order that the matrix of Figure 1D has the high diffusion property required for the linear function P that is explained in Figure 1C, as the MDS matrix, it is required that all the small matrices are regular, when an optional small matrix where the column number and that of rows are the same is selected from a whole matrix of four columns and four rows in the case that a partial matrix $a_{ij}$ is deemed to be an element.

In other words, all of the (1,1) small matrices that designate one column and one row, the (2,2) small matrix that designates two columns and two rows, the (3, 3) small matrix that designates three columns and three rows, and the (4, 4) small matrix that matches the whole matrix have such property that they all have reverse matrices, and the rank of the matrix equation with the same arrangement is not 0, but full.

The design of the MDS matrix as linear conversion P that plays an important role to the diffusion of data in the F function inside the Feistel structure in a common key block encryption method is carried out assuming that the input/output size of a plurality of S boxes is equal. However, there is the problem of whether appropriate linear conversion P exists, or how to configure the conversion if P exists, is not conventionally known at all in the case that the input/output size differs among the plurality of S boxes.

As for another algorithm of a common key block cipher, there is an algorithm obtained by repeating a structure named Feistel structure, or an algorithm obtained by repeating a structure named SPN structure.

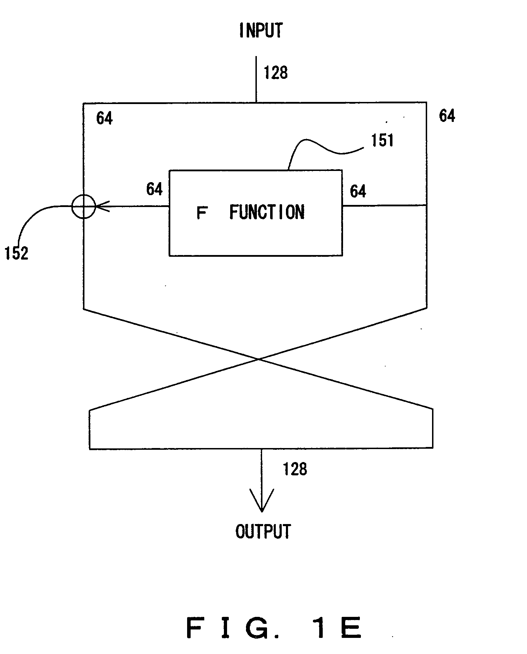

Figure 1E is an explanatory diagram of Feistel structure. In the same figure, for example, input 128 bits are divided into the right-side 64 bits and left-side 64 bits. The right-side 64 bits are input to the nonlinear function called F function 51. The exclusive OR between the output and the left-side 64 bits is computed by XOR152. The result is output as the right-side 64 bits of the output 128 bits. The right-side 64 bits of the input 128 bits are output unchanged as the left-side 64 bits. Sixteen pieces of such Feistel structure are repeated and the encryption process is performed.

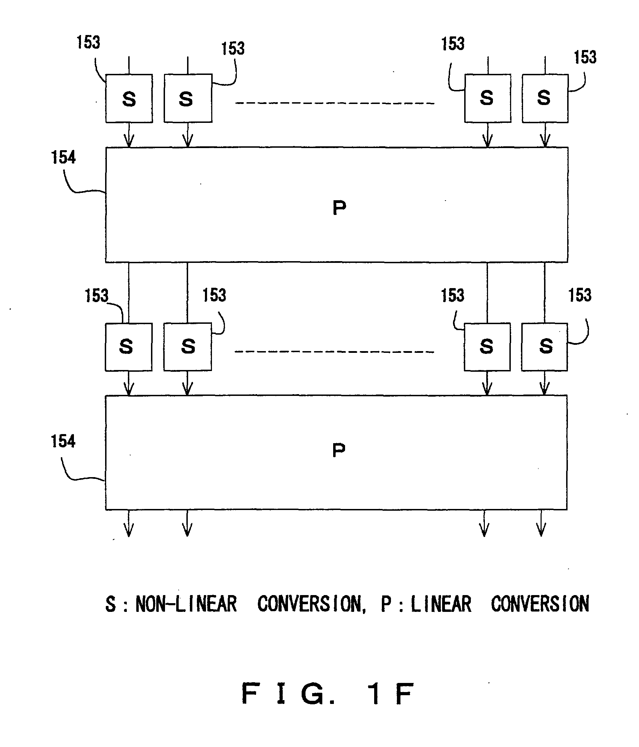

Figure 1F is an example of SPN structure. In this structure, nonlinear conversion 153 and linear conversion P 154 that are called S box, are combined to be used.

S of the S box means substitution, that is, replacement and a function P means permutation, that is, replacement. At present, however, S generally indicates a nonlinear map, and P indicates not only the linear conversion but also the linear conversion performed for each bit.

In either case, the encryption process is performed by repeating a plurality of pieces of such an SP network (SPN) structure. Furthermore, the SPN structure is used as the F function in the Feistel structure of Figure 1E, which will be described later, but Figure 1E shows the Feistel structure as a whole.

In such a common key block encryption method, even if either Feistel structure or SPN structure is used, it is required to perform the encryption so as to secure the safety of data preferably with a few pieces of the structure. However, in the case that the Feistel structure is used, only half of the length of the input data is stirred. Therefore, there is a problem that the structure is effective for stirring data in a word, but the structure is not so effective for stirring data beyond a word. Further, the input and output are formed symmetrically. Therefore, there is the possibility that a differential approximation equation of a repetition type or a linear approximation equation might exist for a cipher. Accordingly, there is the problem that the cipher is exposed to differential attack or linear attack.

On the other hand, in the case of using the SPN structure, the structure has the advantages that the structure is effective for stirring the data inside a word, and the input and output are asymmetrically formed. However, the whole input data length is required to be divided to be input into a plurality of S boxes. Since the S box generally uses a box to be held as a table in the memory, there is the problem that it takes a long time to perform the processes in the case where the table reference number increases as the number of S boxes increases and only a plurality of pieces of SPN structure are combined.

Embodiments of the present invention aim to provide a code-message forming apparatus and a formation method thereof that determine whether the linear conversion with an excellent data diffusion performance exists in the case that the input/output size differs among a plurality of S boxes, forms the pseudo MDS matrix equivalent to the linear conversion in the case that the linear conversion like that exists, and forms the code-message corresponding to the input data using the matrix, taking the above-mentioned problem into consideration.

It is also an aim of these embodiments to provide a code-message forming apparatus and a formation method thereof that perform an encryption process by combining the Feistel structure and the SPN structure, and to reduce the defect of each structure as much as possible. It is a further aim to perform an excellent data diffusion performance by reducing a computation amount as much as possible by enhancing the data stirring effect in the S box of the SPN structure.

The encrypting apparatus of the present invention is provided with a set of bit numbers inputting unit and a value indicating an existence probability of linear converting unit outputting unit in a computing apparatus using the SPN structure having a plurality of S boxes and a linear converting unit in the F function. Further, the encrypting apparatus of the present invention is characterized in that at least one first data converting units and at least one second data converting units are continuously combined between the data input and data output in the computing apparatus that receives data input and sets the computation result for the data input as data output.

At the first aspect of the present invention, the set of bit numbers inputting unit receives the input of a set $T=[t_1, t_2, t_3, ..., t_r]$ of bit numbers obtained by unequally dividing all the bit numbers of the input data to be given to the computing apparatus. The value indicating an existence probability of linear converting unit outputting unit outputs a value $A_T$ indicating the existence probability of a suitable linear converting unit corresponding to a plurality of S boxes in which the divided bit numbers are set as an input bit number and an output bit number.

At the second aspect of the present invention, the first data converting unit performs data conversion using the Feistel structure, and the second data converting unit performs data conversion using the SPN structure.

Embodiments of the present invention will now be described, by way of example only, with reference to the accompanying drawings, in which:

Figure 1A is a diagram showing the basic structure of a DES cipher;
Figure 1B is an explanatory diagram of the configuration example of the F function in Figure 1A;
Figure 1C is an explanatory diagram of MDS conversion as linear conversion P inside F function;
Figure 1D is an explanatory diagram of an MDS matrix as MDS conversion;
Figure 1E shows an example of Feistel structure;
Figure 1F shows an example of SPN structure;
Figure 2A is a block diagram showing an exemplary configuration according to an embodiment of the present invention;
Figure 2B is a block diagram showing the system configuration of an encrypting apparatus as the embodiment of the present invention;
Figure 3 shows an example of the configuration of the F function in the present embodiment;
Figure 4 is a whole flowchart showing a code-message formation process;

Figure 5 is a detailed flowchart of the process of obtaining the maximum value $A_T$ of the number of active S boxes;
Figure 6 is a detailed flowchart of the process of obtaining a pseudo MDS matrix;
Figure 7 shows an example of the obtained pseudo MDS matrix;
Figure 8A and 8B explain small matrices corresponding to two sets;
Figure 9 shows an example (No. 1) of the small matrix of the pseudo MDS matrix;
Figure 10 shows an example (No. 2) of the small matrix of the pseudo MDS matrix;
Figure 11 is a diagram (No. 1) showing partial matrices to obtain a MDS matrix of 30 columns and 30 rows;
Figure 12 is a diagram (No. 2) showing partial matrices to obtain a MDS matrix of 30 columns and 30 rows;
Figure 13 shows an example of the MDS matrix that uses the partial matrix of Figures 11 and 12;
Figure 14A is a block diagram (No. 1) showing an exemplary configuration in accordance with an embodiment of the present invention;
Figure 14B is a block diagram (No. 2) showing an exemplary configuration in accordance with an embodiment of the present invention;
Figure 14C is a block diagram (No. 3) showing an exemplary configuration in accordance with an embodiment of the present invention;
Figure 14D is a block diagram (No. 4) showing an exemplary configuration in accordance with an embodiment of the present invention;
Figure 15 is a block diagram showing a system configuration of the encrypting apparatus in accordance with an embodiment of the present invention;
Figure 16 shows an example of the combination of Feistel structure and SPN structure;
Figure 17 shows an example of the configuration of SPN structure;
Figure 18 is a whole flowchart showing the decision process of an encryption algorithm and the encryption process of input data;
Figure 19 shows an example of F function to be used in Feistel structure;
Figure 20 is a detailed flowchart showing the decision process of SPN structure;
Figure 21 is a diagram explaining the appearance possibility of an output differential to the input differential which is given to S function;
Figure 22 is a diagram explaining the materialization probability of a linear relational equation between input bits and output bits inS function;
Figure 23 is a diagram explaining an example of interleaving conversion; and
Figure 24 is a diagram explaining the loading process of the program to the computer in accordance with an embodiment of the present invention.

Embodiments of the present invention are explained below in detail with reference to the diagrams.

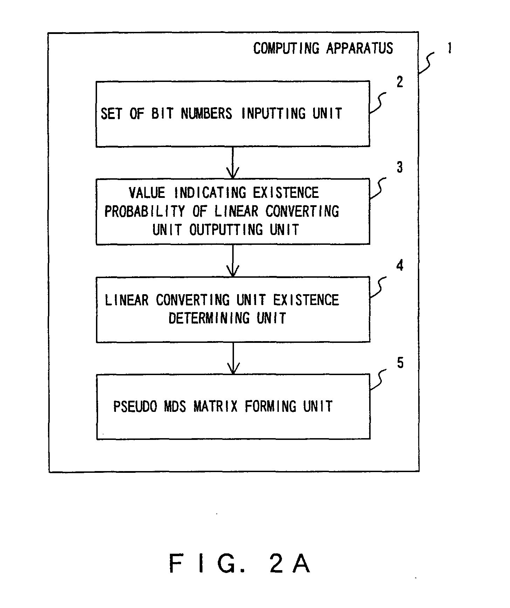

Figure 2A is a block diagram showing in principle the configuration of a computing apparatus in accordance with an embodiment of the present invention. The figure is a block diagram showing the configuration of a computing apparatus 1 that is provided with a plurality of S boxes and a linear converting unit in an F function of the Feistel structure.

In Figure 2A, a set of bit numbers inputting unit 2 receives a set $T=\{t_1, t_2, t_3, ... t_r\}$ of the bit numbers that are obtained by unequally dividing all the bit numbers of the input data that is given to the computing apparatus 1.

A value indicating an existence possibility of linear converting unit outputting unit 3 outputs a value that indicates the existence possibility of a linear converting unit with an excellent data diffusion performance corresponding to a plurality of S boxes where divided bit numbers are respectively set to an input bit number and an output bit number, for example, the maximum value $A_T$ of the numbers of active S boxes.

According to the preferred embodiments of the present invention, a linear converting unit existence determining unit 4 determining that an appropriate linear converting unit exists when the value of this $A_T$ is positive is further provided. Still further, a pseudo MDS matrix forming unit 5 forming a pseudo MDS matrix corresponding to the MDS matrix in the case that the bit numbers are equally divided, is provided as the linear converting unit.

In the preferred embodiments of the present invention, the value indicating an existence probability of linear converting unit outputting unit 3 is further provided with a minimum value determining unit that obtains a minimum value $u_k$ (k=1,2, , r) of the sum of the elements of the set that is formed by selecting optional k elements from the elements of the above-mentioned set of bit numbers, and a maximum value determining unit that obtains a maximum value $v_k$ of the sum of the elements of the set that is formed by similarly selecting k elements. The value of $A_T$ can be obtained by setting as $w_k$, a value obtained by subtracting the maximum value of k' that satisfies $u_k \geqq v_{k'}$ (k' =0,1, r, $v_0$=0) regarding to the value k, from k, thereby subtracting the maximum value of wk from the value of (r+1).

Furthermore, in the preferred embodiments of the present invention, the pseudo MDS matrix forming unit 5 sets a matrix of r columns and r rows of which element is a partial matrix $M_{ij}$ of $t_i$ columns and $t_j$ rows with an element 0 or 1, as $M=(M_{ij})$ (i, j=1,2,..., r). Then, the unit obtains $c(e)=e+r-A_T+1$ for the respective positive numbers from e-1 to ($A_T$-1), and also obtains T1 formed by optionally selecting e elements of the set T and $T_2$ formed by optionally selecting c (e) elements. In this way, the unit can obtain a matrix M such that its own small matrix corresponding to the set ($T_1$, $T_2$) and the rank of its own small matrix are equal to the column number or rank number.

At this time, the small matrix corresponding to, for example, the set ($T_1$, $T_2$) can be composed of the partial matrix that is designated by the column corresponding to each element of the set $T_1$ and by the row corresponding to each element of the set $T_2$, among the above-mentioned partial matrices $M_{ij}$.

In the computation method that uses the SPN structure provided with a plurality of S boxes and a linear converting unit in an F function as the computation method of the present invention, a method of receiving the input of a set T of the bit numbers that are obtained by unequally dividing the bit numbers of the input data to be given, thereby outputting a value indicating the existence possibility of the appropriate linear converting unit corresponding to a plurality of S boxes where the divided bit numbers are set as an input bit number and an output bit number, for example, the maximum value $A_T$ of the number of active S boxes, is used.

According to this method, it can be determined that an appropriate linear converting unit exists when the value of $A_T$ is positive in the embodiments of the present invention. Further, a pseudo MDS matrix corresponding to the MDS matrix obtained in the case that bit numbers are equally divided, can be formed as a linear converting unit.

In the present invention, furthermore, as for the recording medium that is used by a computer performing a computation process using the SPN structure provided with a plurality of S boxes and a linear converting unit within an F function, a portable computer-readable recording medium that stores a program causing the computer to perform the step of receiving the input of a set T of bit numbers that is obtained by unequally dividing all the bit numbers of the input data to be given, and the step of outputting a value indicating the existence possibility of an appropriate linear converting unit corresponding to a plurality of S box in which the divided bit numbers are set as an input bit number and an output bit number, for example, the maximum value $A_T$ of the number of active S boxes.

As mentioned above, the present invention can form a linear converting unit with an excellent data diffusion performance for the case where the input/output bit number of a plurality of S boxes is unequal in the SPN structure that configures an F function inside the Feistel structure.

The encryption algorithm in the case where all the input/output bit numbers of a plurality of S boxes are not the same in the SPN structure that configures the F function provided in the Feistel structure, and an encrypting apparatus using the algorithm are explained as the embodiments of the present invention.

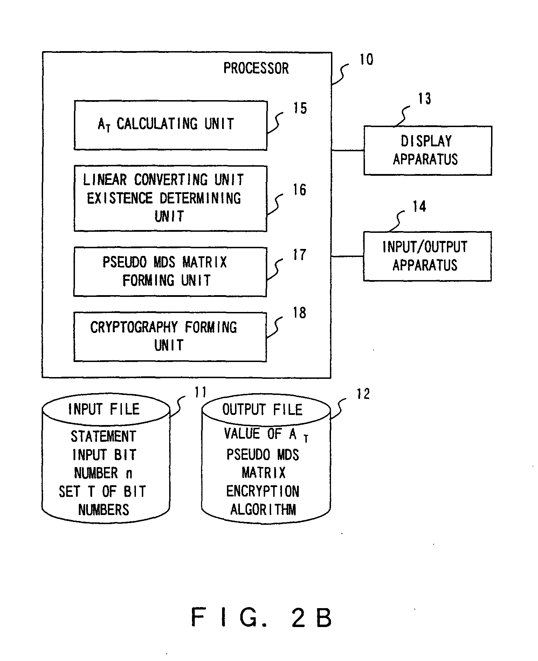

Figure 2B is a block diagram showing the configuration of such an encrypting apparatus. In the same figure, the encrypting apparatus is composed of a processor 10, an input file 11, an output file 12, a display apparatus 13, and an input/output apparatus 14.

In the input file 11, for example, a statement to be encrypted, the bit number n of the input data to the F function in the Feistel structure, a set T of input bit numbers $t_1$, $t_2$, ...$t_r$ for each S box in the case that the bit number n is inputted to a plurality of S boxes, etc. are stored.

In the processor 10, a calculating unit 15 that calculates a value $A_T$ indicating the existence possibility of an appropriate linear converting unit corresponding to the output of a plurality of S boxes in the case that each input/output bit number to the plurality of S boxes is not the same, using the contents of the set T stored in the input file 11, a linear converting unit existence determining unit 16 that determines whether the linear converting unit exists, using the calculated value, a pseudo MDS matrix forming unit 17 that calculates the pseudo MDS matrix operating as the above-mentioned converting unit when it is determined that such a linear converting unit exists, a code-message forming unit 18 that forms the code-message for the statement that is stored in the input file 11, using the formed pseudo MDS matrix, and the like are provided.

In the output file 12, the value $A_T$ that is calculated by the calculating unit 15, the pseudo MDS matrix, the encryption algorithm using the pseudo MDS matrix, etc. are stored.

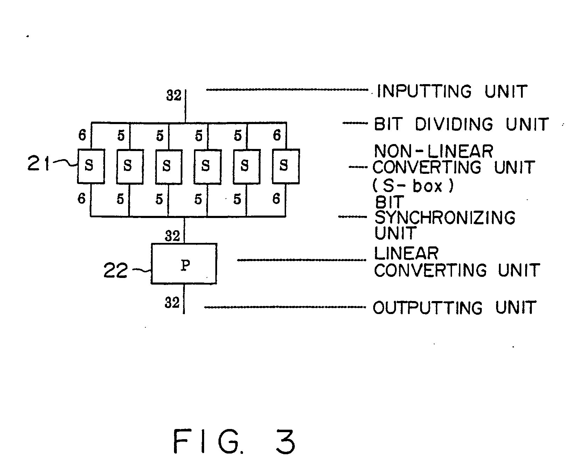

Figure 3 shows an example of the SPN structure in the F function that is used in the present embodiment. The input data 32 bits are divided into, for example, 6,5,5,5,5 and 6 bits, and are input to each S box 21 functioning as a nonlinear converting unit. Each S box has the same output bit number as the input bit number. The output of each S box is synthesized and given to a linear converting unit P22 as 32 bits. The conversion result becomes the output of the F function.

In the present embodiment, the point of the present invention is to determine whether an appropriate linear converting unit P exists using the way of dividing the bits in the case that the input/output bit number for a plurality of S boxes is not the same, or how to obtain the linear converting unit in the case that the unit P exists.

Here, the following are the explanation of the reason why the bit number n of input data is divided unequally. In Figure 17C that is explained in the conventional technology, the 8 bits obtained by dividing the input 32 bits are respectively input to four S boxes 71. Such an S box is stored in the first cache memory of a computer as table for the high-speed computation, and the computation is carried out by accessing the table. In Figure 1C, four tables are provided, and accordingly four times of table accesses are required.

In the present embodiments, on the contrary, as shown in Figure 3, for example, the input 32 bits are divided into six parts such as 6, 5,5,5,5, and-6 bits, and they are respectively input to six S boxes. When the input data is divided into six S boxes each having a small bit number, the size of the table corresponding to each S box becomes small. Therefore, even if a computer having a small capacity of the first cache memory is used, the computation can be carried out.

As the first cache memory capacity of a recent computer has increased, the number of table accesses is decreased by enlarging the size of one table, thereby speeding up the computation. Thereupon, in the present embodiments, the bit number dividing method that can modify the dividing method of a bit number corresponding to the cache memory capacity of a computer is used.

In the case that 32 bits are divided into four pieces of 8 bits as mentioned above, there is only one means of modifying the method to a method of dividing the input data into 8, 16, and 8 bits in order to provide three tables. Therefore, the table with $2^{16}$ areas is required for the S box of a 16-bit input. On the contrary, in the dividing method of Figure 3, the input data can be divided into three parts such as 11,10, and 11 bits for two sets. If the table with $2^{11}$ areas is stored in the first cache memory of a computer, the computation can be performed at high-speed.

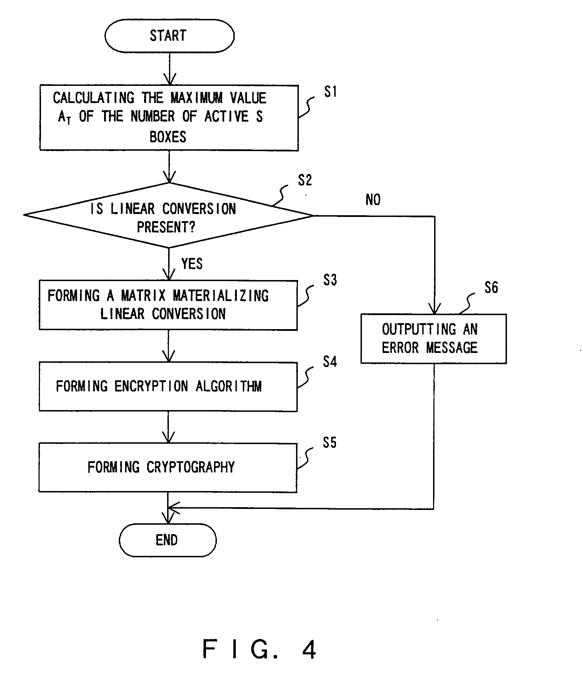

Figure 4 is a whole flowchart of the code-message formation process in the present embodiment. When the process starts in the same figure, a value $A_T$ for determining whether the linear converting unit explained in Figure 2B exists is obtained in step S1. As for the value $A_T$, the maximum value of the minimum value of the number of the elements of the above-mentioned active S box is used. Hereinafter, this $A_T$ is called "the maximum value of the number of active S boxes".

It is determined in step S2 whether the appropriate linear conversion P exists according to the obtained value $A_T$. Specifically, it is determined that such linear conversion exists when the value of $A_T$ is positive, and it is determined that such linear conversion does not exist when the value is 0 or negative.

When it is determined that the linear conversion exists, a matrix that realizes the linear conversion, in other words, a pseudo MDS matrix is formed in step S3. In step S4, the encryption algorithmic that uses the pseudo MDS matrix, in other words, Feistel structure is formed. In step S5, a statement is encrypted using the encryption algorithm, and the processes terminate.

When the value of $A_T$ becomes 0 or negative and it is determined that the appropriate linear conversion does not exist in step S2, the message indicating that the error occurs in step S6 is output, and the processes terminate.

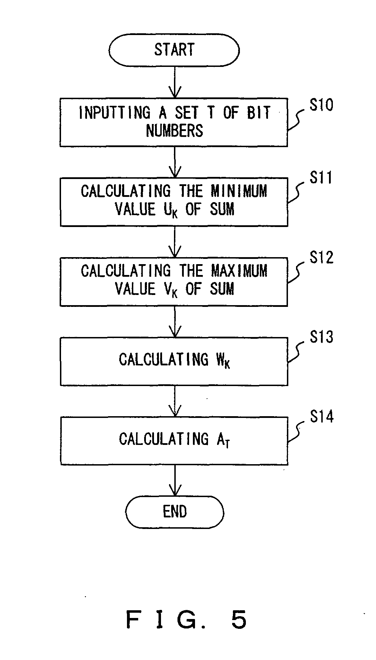

Figure 5 is a detailed flowchart of the calculation process of step S1 of Figure 4, in other words, the computation process of the maximum value $A_T$ of the number of the active S boxes. First of all, the contents of the set T are input in step S10. In step S11, the minimum value $u_k$ of the sum of the elements of the set that is obtained by selecting k elements from r elements that configure the set T, is obtained for K=0,1,2, .... r.

Subsequently in step S12, the maximum value $v_k$ of the sum of the elements of the set that is obtained by selecting optional k elements from the elements of the set T is similarly obtained.

In step S13, the value that is obtained by subtracting from k, the maximum value of k' that satisfies the following inequality

$$u_k \geqq v_k, \text{ (however, } v_0=0)$$

regarding k (=1,2, , r) and k' (=0,1,2, , r) is obtained as $w_k$ (k=1,2, , r) .

Finally, the maximum value of $w_k$ is subtracted from r+1 in step S14, and it becomes the value of $A_T$, thereby terminating the processes.

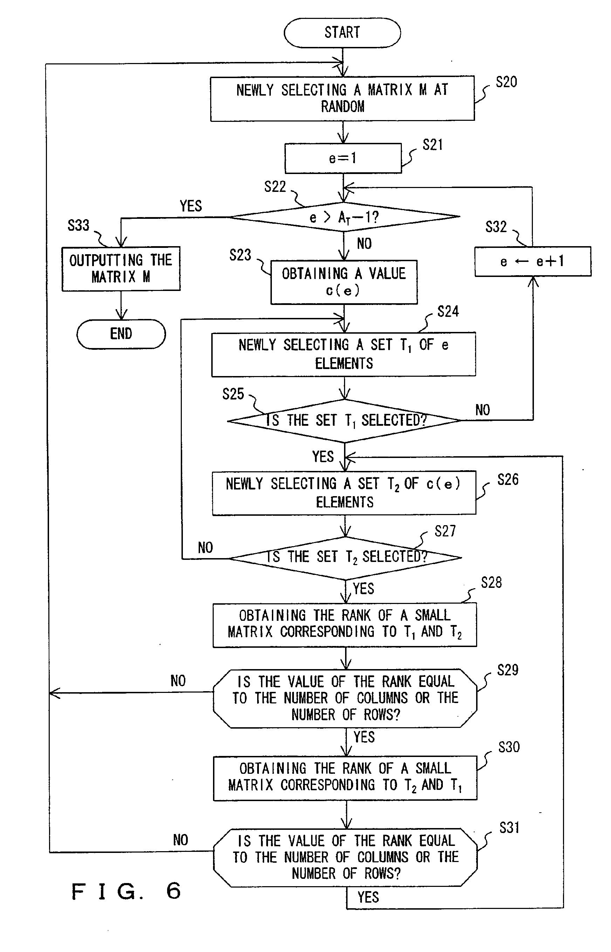

Figure 6 is a detailed flowchart of the process performed in step S3 of Figure 4, in other words, the pseudo MDS matrix formation process. When the process starts in the same figure, a matrix $M_{ij}$ (i, j=1 to r) of $t_i$ columns and $t_j$ rows of which the element is 0 or 1 is formed according to the contents of the set T of the divided bit numbers, in step S20. A matrix M of r columns and r rows while setting r x r pieces of matrixes $M_{ij}$ as elements is newly selected at random. In the example of the F function that is explained in Figure 3, this matrix M is composed of 32 columns and 32 rows as a whole. Here the $M_{ij}$ is called a partial matrix of the matrix M.

Subsequently in step S21, the value of e is initialized to 1. In step S22, it is determined whether the value of e exceeds the value that is obtained by subtracting 1 from the maximum value AT of the number of active S boxes. In the case that the value of e does not exceed the maximum value, the value of c (e) is obtained using the following equation in step S23

$$C(e)=e+r-A_T+1$$

In step S24, a set T1 is newly obtained by optionally selecting e elements from the set T. In step S25, it is determined whether the new set $T_1$ is selected. In the case that the new set $T_1$ is selected, a set $T_2$ is newly obtained by optionally selecting (c) e elements from the set T in step s26. In step S27, it is determined whether the new set $T_2$ is selected. Then, the set $T_1$ and set $T_2$ that are newly selected in steps S24 and S26 are described as follows:

$$T_1=\{t_{i1}, t_{i2}, ... t_{ie}\}$$

$$T_2=\{t_{j1}, t_{j2}, ... t_{jc(e)}\}$$

When it is determined that the set $T_2$ is newly selected in step S27, the rank of the small matrix corresponding to the sets $T_1$ and $T_2$ is obtained among the small matrixes of matrix M in step S28. The meaning of the small matrix corresponding to these sets $T_1$ and $T_2$ will be described later. Then, it is determined whether the value of the rank that is obtained in step S29 is equal to either

$$\sum_{p=1}^{e} t_{ip} \text{ or } \sum_{q=1}^{c(e)} t_{jq} ,$$

in other words, either the column number or the row number, or not equal to any of them.

In the case that the value of the rank is equal to anyone of them, the rank of a small matrix corresponding to the sets $T_1$ and $T_2$ among small matrixes of the matrix M is obtained in step S30, and it is determined whether the value of the rank is equal to either

$$\sum_{p=1}^{e} t_{ip} \text{ or } \sum_{q=1}^{c(e)} t_{jq}$$

in step S31.

When it is determined in step S31 that the value of the rank is equal to either of the two totals (the column number, and the row number), the process returns to step S26, c(e) elements are newly selected, a new set $T_2$ is obtained, and the processes in and after the determination process of step S27 are repeated.

When it is determined that a set $T_2$ of c(e) elements cannot be newly selected in step S27, the process for the set that is selected before in step S24, in other words, a set $T_1$ that consists of e elements, terminates. Therefore, a new set is obtaine das the set $T_1$ that consists of e elements in step S24. The processes in and after step S25 are repeated.

When it is determined that the new set $T_1$ cannot be selected in step S25, the process corresponding to the value of e=1 that is initialized in step S21 terminates. Therefore, the value of e is incremented in step S32, and the processes in and after step S22 are repeated.

When it is determined in step S29 that the value of the rank is equal to neither of the values of two sum totals or when it is determined in step S31 that the value of the rank is equal to neither of the values of two sum totals, during such a process, the matrix M that is randomly selected in step S20 is regarded to be an inappropriate matrix as a pseudo MDS matrix. Then, in step S20, the processes in and after the process of randomly selecting a new matrix M are repeated. When it is determined that the value of e exceeds the value of $A_T$-1 in step S22, the contents of the matrix M are output as a pseudo MDS matrix, and the processes terminate.

The processes that are explained in Figures 5 and 6 are furthermore explained using a concrete example. The set of the input/output bit numbers that are divided into sixboxes used for the 32 input bits that are explained in Figure 3 is obtained by the following equa-

tion:

$$T=\{6,5,5,5,5,6\}$$

The above-mentioned minimum value $u_k$ and also maximum value $v_k(v_{k'})$ corresponding to this set T are as follows:

$$(u_1, u_2, u_3, u_4, u_5, u_6)=(5,10,15,20,26,32)$$

$$(v_1, v_2, v_3, v_4, v_5, v_6)=(0, 6,12,17,22,27,32)$$

The result $w_k$ becomes the following equation, and the maximum value is 1.

$$(w_1, w_2, w_3, w_4, w_5, w_6)=(1,1,1,1,1,0)$$

Finally, the maximum value $A_T$ of the number of active S boxes is obtained by the following equation using the maximum value of this result $w_k$:

$$A_T=(6+1)-1=6$$

Since the value of this $A_T$ is 6, in other words, positive, it is determined that an appropriate linear conversion exists for the nonlinear conversion that uses six S boxes having divided input/output bit numbers. As above-mentioned, the matrix M is composed of 32 columns and 32 rows, and its element is randomly selected from 0 and 1. Then, it is determined whether the selected matrix satisfies the property of the pseudo MDS matrix using the flowchart of Figure 6.

Theoretically, the matrix M can be formed by repeating the processes described in the flowchart of Figure 6 in the case that all the elements of the matrix composed of 32 columns and 32 rows are made to be 0 or 1, thereby obtaining a pseudo MDS matrix. However, the computation amount becomes enormous.

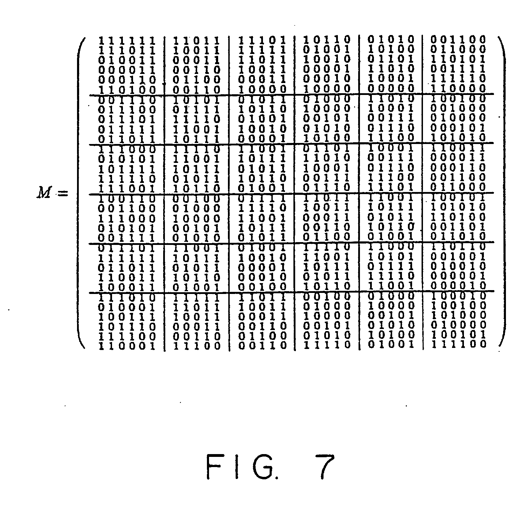

In the present embodiment, the pseudo MDS matrix forming method is used to decrease the computation amount. The method will be explained later. An example of the matrix M that is obtained using the method is shown in Figure 7. The first part of such a process until the matrix of this example is finally output in step S33 in the processes shown in the flowchart of Figure 6 is specifically explained. In Figure 7, the part that is divided by solid lines inside the matrix corresponds to the partial matrix $M_{ij}$ within the matrix M that is explained in step S20 of Figure 6.

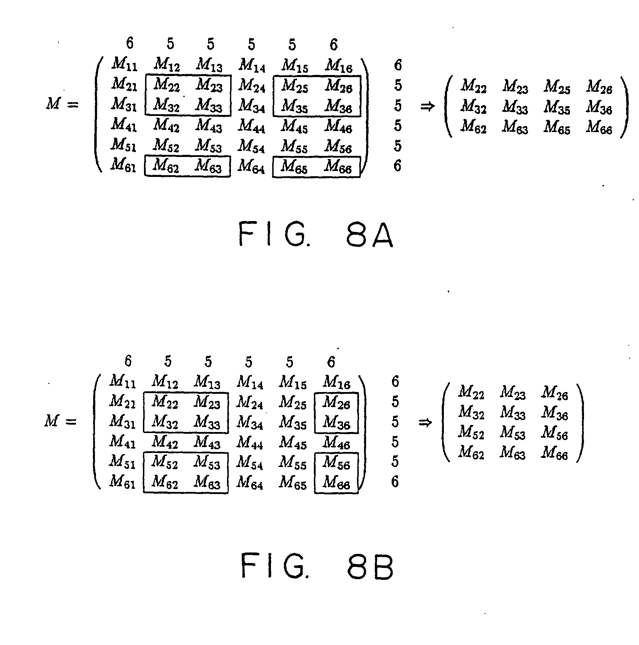

Before explaining the concrete example of the process corresponding to Figure 6, the meaning of the small matrix corresponding to $T_1$ and $T_2$, which is explained in step S28 is explained using Figures 8A and 8B. For example, in the case of $T_1=\{t_2, t_3, t_6\}$ and $T_2=\{t_2, t_3, t_5, t_6\}$ in Figures 8A and 8B, the matrix that is shown in Figure 8A is formed as a small matrix corresponding to $T_1$ and $T_2$, and its rank is required. That is, three columns and four rows are designated from matrix M having a partial matrix $M_{ij}$ that is also a matrix, thereby forming a small matrix. This small matrix is composed of sixteen columns and twenty-one rows in a bit unit, in other words, in 0 or 1 element unit.

As the small matrix corresponding to $T_2$ and $T_1$, which is explained in step S30 of Figure 6, a column corresponding to $t_2$, $t_3$, $t_5$, and $t_6$ that are the elements of the set $T_2$, and a row corresponding to $t_2$, $t_3$, and $t_6$ that are elements of the set $T_1$ are selected, thereby forming a small matrix. This small matrix is shown in Figure 8B. This matrix is composed of twenty-one columns and sixteen rows.

Here, the property that the pseudo MDS matrix should hold as the MDS conversion in the present embodiment is explained. Corresponding to the above-mentioned T that is an example of the set obtained by unequally dividing n=32 bits into 6 pieces, the maximum value of the number of active S boxes is $A_T=6$. In the case that the bit number is equally divided, the value equivalent to AT is 7, and accordingly the differential becomes 1.

As mentioned above, in the MDS matrix functioning as the MDS conversion in the case that bits are equally divided, assuming from a matrix having an element such as $M_{ij}$ (the number of all the columns and the number of all the rows are equal) explained in Figures 8A and 8B, to a small matrix (1,1) that designates optional one column and one row, a small matrix (2,2) that designates two columns and two rows, a small matrix (3,3) that designates three columns and three rows, etc., the property of the MDS matrix is that all the optional small matrixes should be regular.

In a pseudo MDS matrix, on the contrary, since the above-mentioned differential is 1, a matrix in which 1 is added to either column or row of a small matrix to be selected in the case that bits are equally divided, is selected as a small matrix. Therefore, the pseudo matrix has a property such that the rank of an optional small matrix is full, in other words, the rank of the small matrix is equal to the number of the columns or the number of the rows of the pseudo MDS matrix.

That is, the matrix of which the column or row of its small matrix is equal to the rank of each of ten kinds of optional small matrixes such as (1,2), (2,1), (2,3), (3,2), (3,4), (4,3), (4,5), (5,4), (5',6), and (6,5) should be selected as a pseudo MDS matrix in the flowchart of Figure 6. This is the property that the pseudo MDS matrix in this embodiment should hold, but the detailed mathematical explanation (proof, etc.) is omitted here.

Here, the explanation returns to the above-mentioned example, and the first process of selecting a matrix M that has such a property is explained referring to the flowchart of Figure 6. First, the value of e is made to be 1 in step S21 of Figure 6, and 2 is obtained as the value of c (e) in step S23. Then, assume that $\{t_1\}=\{6\}$ having only one element is selected as a set $T_1$ in step S24. Further, assume that $\{t_1, t_2\}=\{6,5\}$ is selected as set $T_2$ having c(e), in other words, two elements in step S26.

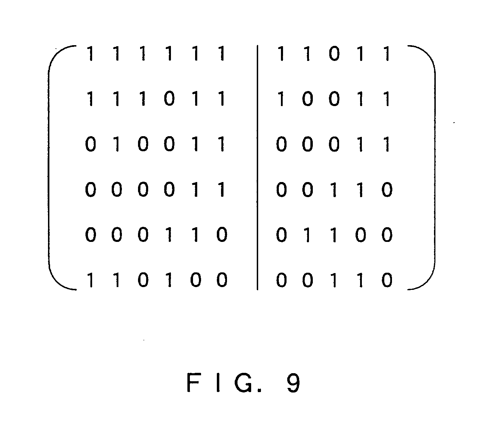

Figure 9 shows a matrix corresponding to $T_1$ and $T_2$ in step S28, of which the rank should be calculated in this case. In other words, in Figures 8A and 8B, the first column, and the first and second rows are designated as a column and a row, respectively. The small matrix is composed of $M_{11}$ and $M_{12}$, and the actual contents are shown in Figures 7 to 9. The rank of this small matrix is 6.

It is determined in step S29 whether the value of this rank, in other words, 6 is equal to either value

$$\sum_{p=1}^{e} t_{ip} \ \ \text{or value} \ \ \sum_{q=1}^{c(e)} t_{jq} \ ,$$

or equal to neither of them. These two values show the column number and the row number of the small matrix of Figure 9. In this case, the column number, in other words,

$$\sum_{p=1}^{e} t_{ip}$$

is equal to the value of the rank, so that it is determined that this small matrix is a full rank.

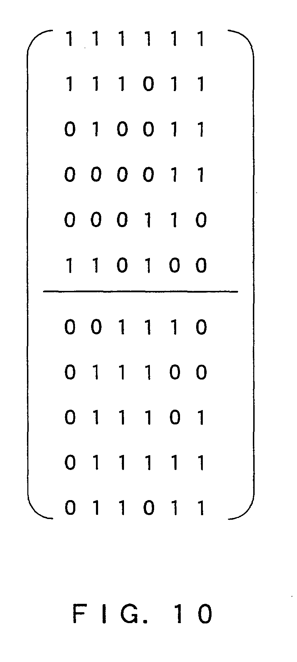

Figure 10 shows an example of the small matrix corresponding to $T_2$ and $T_1$ of which the rank should be calculated in step S30. By designating the first and second columns as a column, and the first row as a row among $M_{ij}$ of Figure 8A or Figure 8B similarly to the above-mentioned, the small matrix shown in Figure 10 is composed of $M_{11}$ and $M_{21}$. The rank is 6, and is compared with the two sum totals in step S31 similarly to the process in step S29, and it is determined that the rank is equal to the value of

$$\sum_{p=1}^{e} t_{ip} \ ,$$

thereby continuing the subsequent processes.

It is confirmed that regarding optional small matrixes of the above-mentioned ten matrixes, the rank of each small matrix is full for the matrix of 32 columns and 32 rows of Figure 7, in accordance with the flowchart of Figure 6. Finally, this matrix M is output as a pseudo MDS matrix in step S33.

Next, the formation method of the pseudo MDS matrix shown in Figure 7 is explained. In order to form this matrix, theoretically all the elements of the matrix of 32 columns and 32 rows are randomly changed to 0 or 1, and a matrix M that satisfies the flowchart of Figure 6 is retrieved. However, the computation amount becomes enormous.

As a more efficient method, in the present embodiment, the number of all the bits is set to thirty bits, and the MDS matrix is obtained for a set T={5,5,5,5,5,5} that is obtained by dividing 30 bits into six pieces using the conventional technology. Then, a pseudo MDS matrix is formed for the obtained matrix of thirty columns and thirty rows, by adding elements of one column and one row corresponding to $M_{ij}$ (j=1 to 6) of the top column, $M_{6j}$ (j=1 to 6) of the bottom column, $M_{i1}$ (i=1 to 6) of the most left row, and $M_{i6}$ (i=1 to 6) of the most right row as shown in Figure 7.

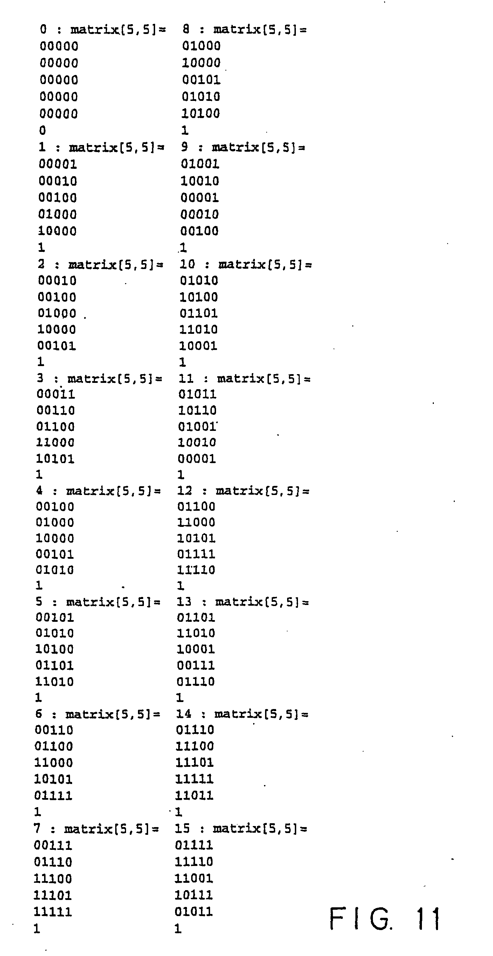

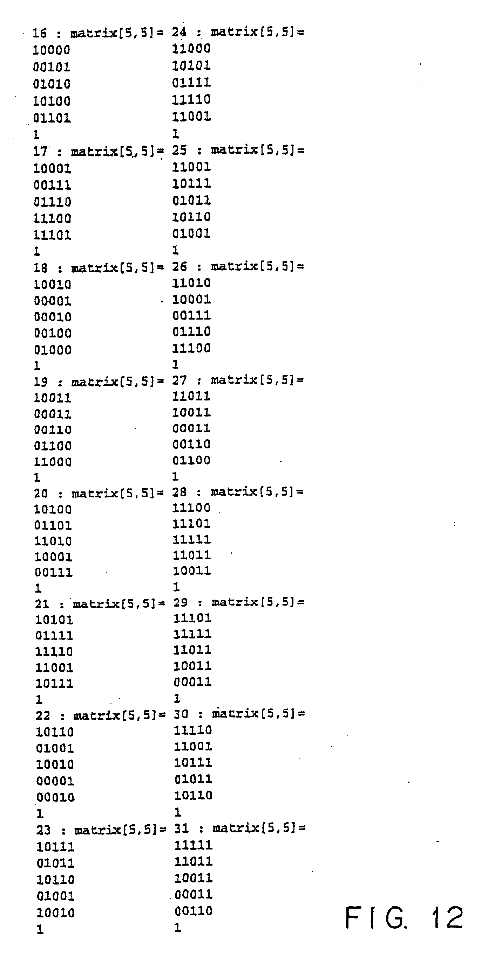

Figures 11 and 12 show thirty-two partial matrixes of five columns and five rows to form the MDS matrix of thirty columns and thirty rows. Each of thirty-two partial matrixes is composed of five columns and five rows, and 0 to 31 numbers are attached to the respective partial matrixes. The 0-th matrix is the upper-left matrix of Figure 11, and all the elements of the matrix of five columns and five rows are 0. The number "0" under the matrix of five columns and five rows indicates the value of the matrix equation that corresponds to this matrix (at the same arrangement) . The value of the matrix equation that corresponds to the 0-th matrix is 0.

For example, the value of the matrix equation corresponding to the matrix with number 1, which is located under the above-mentionedmatrix is 1. Therefore, the values of the matrix equations for all the matrixes until the matrix having a number 31, which is located at the lower right of Figure 12 are 1.

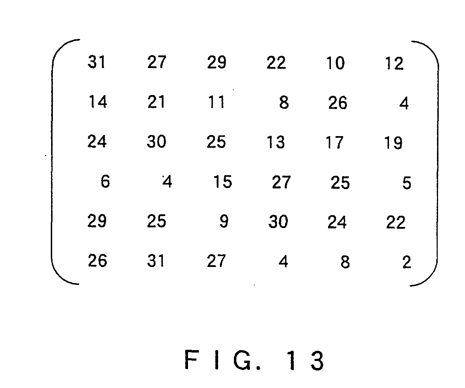

The matrix of Figure 13 is obtained as an example of the MDS matrix that corresponds to the case where 30 bits are equally divided into six pieces by arranging the partial matrixes of five columns and five rows, which are numbered as shown in Figures 11 and 12, using the conventional technology. The number inside the matrix shows the number of each matrix that is explained in Figures 11 and 12.

The matrix that is shown in Figure 13 is a matrix of thirty columns and thirty rows. The pseudo MDS matrix shown in Figure 7 can be easily formed by randomly adding the elements of one column to the top partial matrix and the bottom partial matrix, and the elements of one row to the most-left partial matrix and the most-right partial matrix, and by executing the process of the flowchart shown in Figure 6 to the matrix of Figure 13.

As mentioned above, in the case where the size of input is not the same as that of output in a plurality of S boxes in F function, the present invention can determine whether the pseudo MDS matrix is present as suitable liner conversion. If such a matrix is present, its pseudo matrix MDS matrix is formed. Then, by performing an encryption process using this matrix, a cipher with an excellent diffusion performance can be formed, which greatly contributes to the enhancement of an encrypting apparatus.

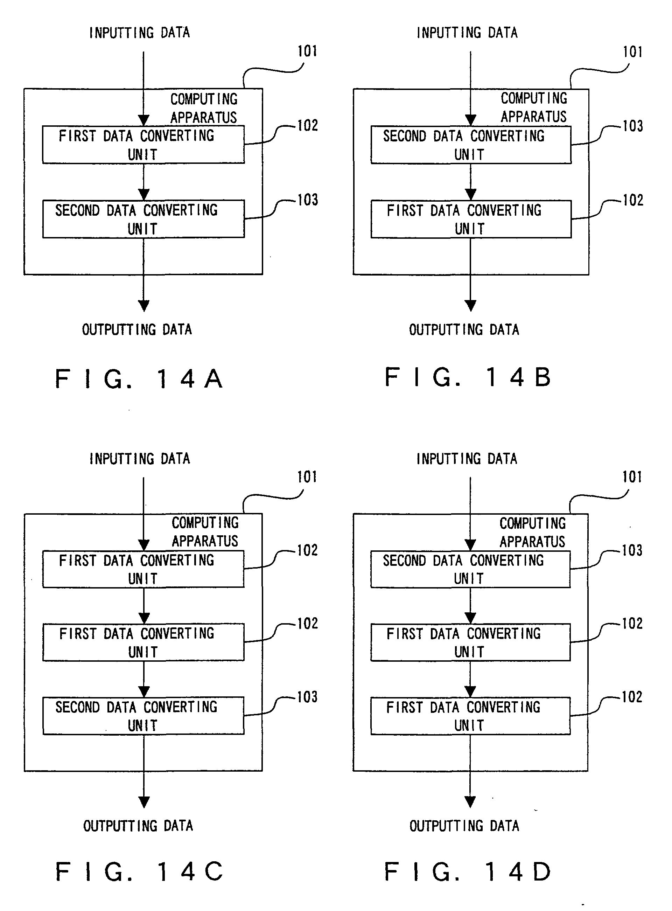

Figures 14A, 14B, 14C and 14D each shows a block diagram of the principle configuration of the computing apparatus of the present invention. Each of these figures shows a computing apparatus for receiving data input and outputting the computation result for the data input as data output. In this computing apparatus 101, at least one first data converting units 102 that perform data conversion using the Feistel structure and at least one second data converting units 103 that perform data conversion using the SPN structure are continuously combined between the data input and data output.

In Figure 14A, for the data input, the first data converting unit 102 is first used, and next the second data converting unit 103 is used. In Figure 14B, on the contrary, the second data converting unit 103 is used, and then the first data converting unit 102 is used.

In Figure 14C, after two pieces of the first data converting units 102 are used, the second data converting unit 103 is used. In Figure 14D, on the contrary, after the second data converting unit 103 is used, two pieces of the first data converting units 102 are continuously used, and the data output is carried out.

In this way, at least one first data converting units 102 and at least one second data converting units 103 are combined to be used in the present invention. Since in the first data converting unit 2 that uses the Feistel structure, only one side of the data is stirred by one unit, two pieces of the units are continuously used, thereby stirring both sides of data. Further, it is possible to form a plurality of sets of the data converting units 102 and the data converting units 103.

According to the embodiments of the present invention, a nonlinear converting unit having an input/ output bit number of 4 bits that is obtained by dividing the block length of one block of data input by a word length, for example, by dividing 128 bits by 32 bits of a word length, and a linear converting unit using, for example, an S box and interleaving conversion are provided in the SPN structure.

As the nonlinear converting unit that composes the SPN structure in the embodiments of the present invention, for example, as an S box, a nonlinear converting unit having a possibility 0 that for a set of input data in which a differential is given at one or more bits (for example, right two bits) among input bits, for example, four bits, a differential appears on a set of output data at the same location, that is, right two bits can be provided. Furthermore, this nonlinear converting unit should also have a possibility 1/2 that an optional linear relational equation only related to the input bit of the right two bits and the output bit of the right two bits can be realized between all the input data and all the output data.

According to the computation method of the present invention in which the computation result for the data input is set as data output, one or more pieces of the first data conversion that performs data conversion using the Feistel structure and one or more pieces of second data conversion that performs data conversion using the SPN structure are combined to be used between the data input and data output.

According to the embodiments of the present invention, at the first data conversion using the SPN structure of this computation method, the nonlinear conversion in which the value obtained by dividing the block length of one block of the data input by a word length is set as an input/output bit number, and the linear conversion using interleaving conversion can be carried out.

As the nonlinear conversion to be executed in the SPN structure in the embodiments of the present invention, the nonlinear conversion having a possibility 0 that for a set of input data in which a differential is given at one or more input bits, for example, the right half bits among the input bits, a differential appears on a set of output data at the same location, that is, the right half bits, and also having a possibility 1/2 that an optional linear relational equation only related to the input bits of the right half and the output bits of the right half can be realized between all the input data and all the output data, can be carried out.

According to the present invention, a portable computer-readable recording medium storing a program causing a computer to combine and execute one or more pieces of the first data conversion that performs data conversion using the Feistel structure and one or more pieces of second data conversion that performs data conversion using the SPN structure, between the data input and data output is used as a recording medium to be used by a computer which executes computation of receiving data input and setting the computation result for the data input as data output.

According to the present invention, in the case where a computation process is performed by combining the Feistel structure and SPN structure between the data input and data output, and a differential appears on a set of input data at the input bits of, for example, right half as mentioned above, the nonlinear conversion such that a differential does not appear on the set of output data at the output bits of right half, is used.

In the present invention, the computing apparatus and computation method are configured by combining the Feistel structure and SPN structure. As such a computing apparatus and a computation method, a code-message forming apparatus that encrypts the input statement and outputs the encrypted statement, and a formation method thereof are explained as the embodiment of the present invention.

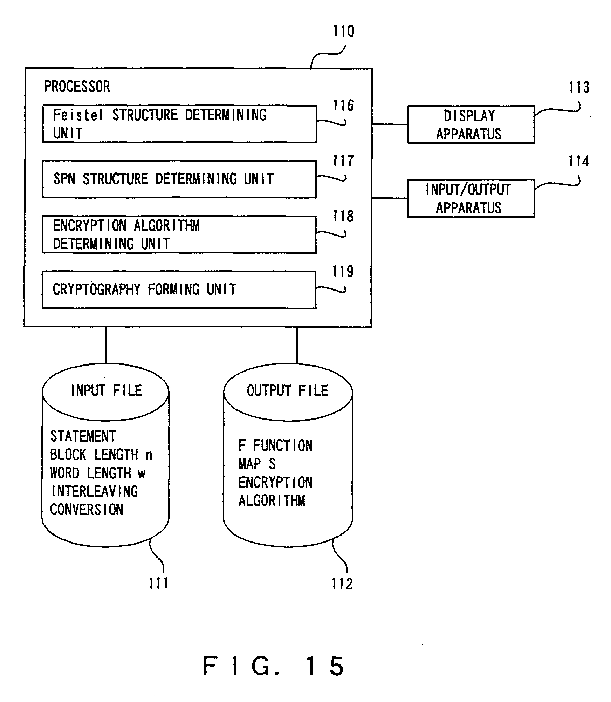

Figure 15 is a block diagram showing the system configuration of the code-message forming apparatus. In this figure, the code-message forming apparatus is composed of a processor 110, an input file 111, an output file 112, a display apparatus 113, and an input/output apparatus 114.

In the processor 110, a Feistel structure determining unit 116 determining the Feistel structure to be used, an SPN structure determining unit 117 determining the SPN structure, an encryption algorithm determining unit 118 determining the encryption algorithm that is obtained by combining the Feistel structure and SPN structure, and a code-message forming unit 119 that encrypts a statement in accordance with the encryption algorithm, are provided.

In the input file 111, a statement which is input data to be encrypted, a bit length n of one block of the input data, a bit length w of a word that is suitable for the computation of the processor 110, contents of the interleaving conversion functioning as the linear conversion that is used in the structure of SPN, which is described later, etc. are stored.

Further, in the output file 112, an F function to be used in the Feistel structure that is determined by the Feistel structure determining unit 116, a map S equivalent to the nonlinear function of the S box that is determined by the SPN structure determining unit 117, the encryption algorithm obtained by combining the Feistel structure and SPN structure that are determined by the encryption address determining unit 118, etc. are stored.

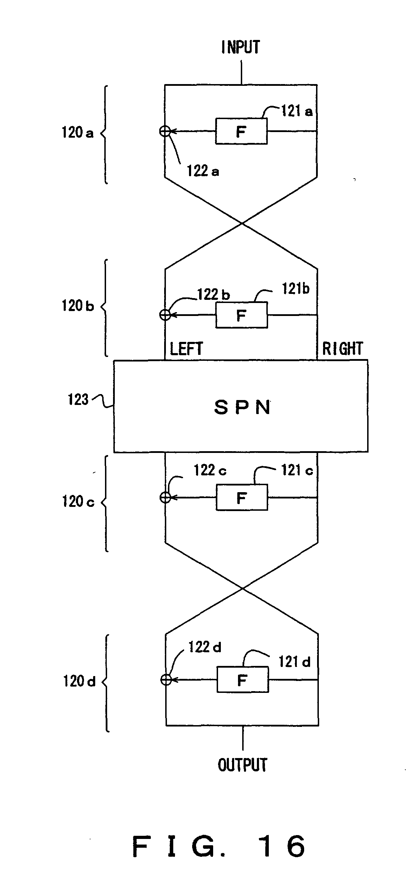

Figure 16 shows the combination of the Feistel structure and SPN structure described in the present embodiment, that is, an example of the encryption algorithm that is decided by the encryption algorithm determining unit 118. First of all, two pieces of computation performed by Feistel structure 120a and 120b are carried out for the input data in this figure. After that, the computation is executed by an SPN structure 123. To the result, two pieces of computation is further executed by Feistel structure 120c and 120d, and the result is output as code-message.

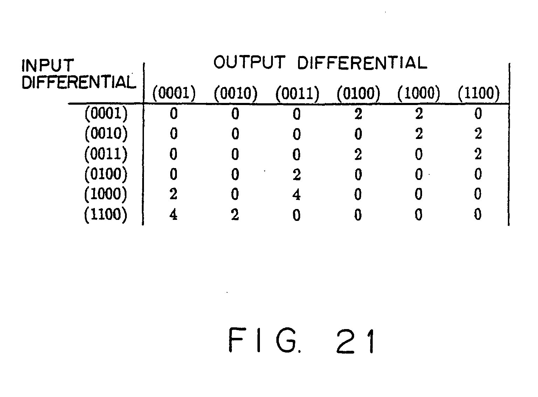

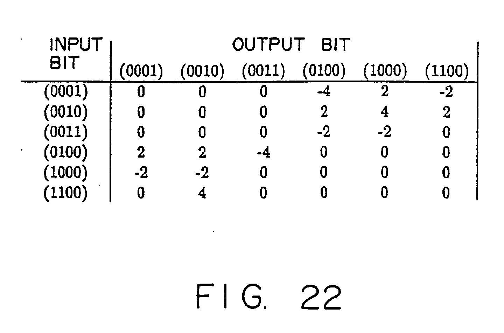

Since only half of the input data is stirred by one piece of the Feistel structure, in Figure 16, two pieces of the Feistel structure are used and at the same time, a device for increasing the stirring performance in a word is adopted in an SPN structure 123 as described later. That is, for the nonlinear function that is used in the S box, the stirring performance in a word is increased using the function that has the property such as that shown in Figures 21 and 22 that are described later. Further, the SPN structure is configured so as to increase the stirring performance among a plurality of words that compose one block, using the interleaving conversion as linear conversion.

Furthermore, since the effect that is obtained by combining a plurality of pieces of SPN structure has reduced when three pieces of the Feistel structure are continuously used, the combination is performed in Figure 16 in such a way that the SPN structure is inserted between two pieces of the Feistel structure.

Figure 17 is an explanatory diagram of the outline of the SPN structure 123. In this figure, interleaving conversion 124 is first carried out for the input data, for example, 128 bits, and data is stirred among four words composed of, for example, 32 bits. The stirring result is given to a plurality of S boxes 125, interleaving reverse-conversion 126 is carried out for the output of the S box 125, and the thus-converted output becomes the output of the SPN structure.

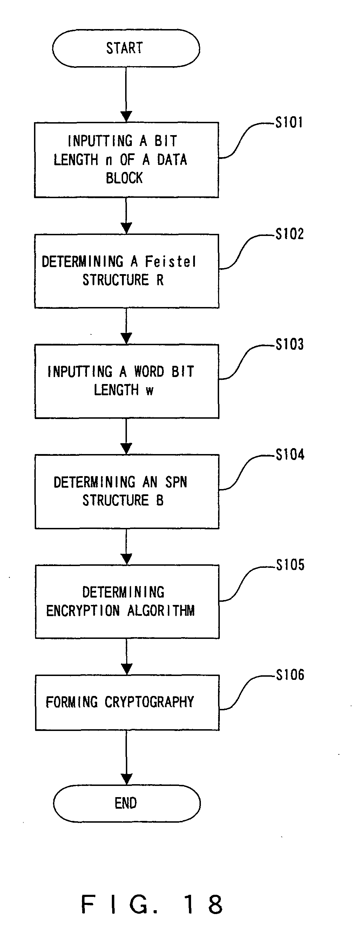

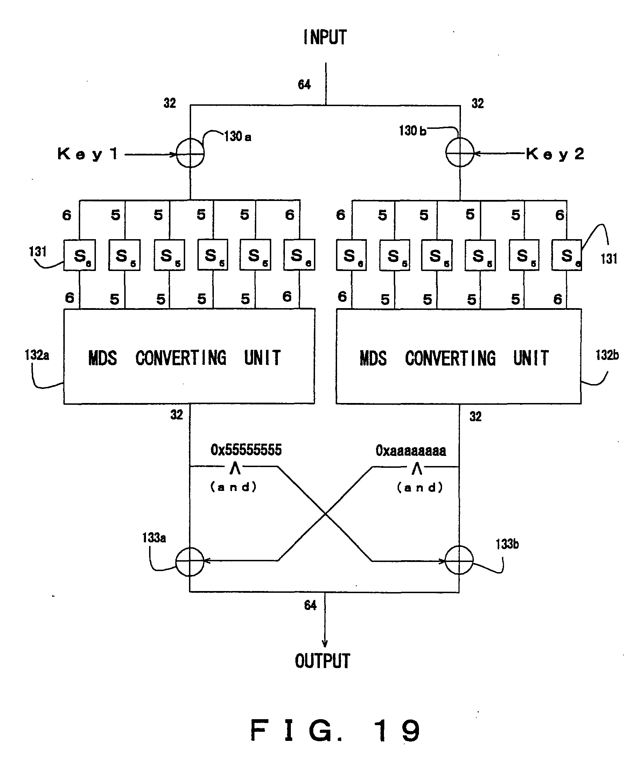

Figure 18 is a whole flowchart of the code-message formation process in the present embodiment. When a process starts in this figure, a statement, that is, a bit length n of the input data block is first input in step S101. In step S102, a Feistel structure R is determined. In the present embodiment, an optional function canbe used as nonlinear function F in the Feistel structure, and its example is explained in Figure 19.

Subsequently, the bit length w of the word suitable for the computer is input in step S103, and an SPN structure B is determined in step S104. Regarding this SPN structure B, the interleaving conversion and the contents of the nonlinear function of the S box become a problem as explained in Figure 17, which will be described later.

One or more pieces of the Feistel structure and one or more pieces of SPN structure are combined in step S105. Then, the encryption algorithm that is shown, for example, in Figure 16 is determined. In step S106, the statement as the input data is encrypted in accordance with the encryption algorithm, thereby forming the code-message, and finally the processes terminate.

Figure 19 shows an example of the F function that is used in the Feistel structure in the present embodiment. As for this F function, an optional nonlinear function can be used, and there is no reason why the function of Figure 19 must be used for this F function, but a characteristic part about this configuration is mainly explained.

In Figure 19, the input data of 64 bits are divided into 32 bits respectively at the right -side and left-side. Then, the exclusive OR between the right-side bits and Keyl, and the exclusive OR between the left-side bits and key2, are obtained by XOR 30a and XOR 30b, respectively. Then, 32 bits are divided into 6 bits or 5 bits to be input into six S boxes 31. There are many cases that as an S box, S boxes in which all the input bit numbers and all the output bit numbers are the same, are arranged to be used. Here, the S box with 6-bit input/output and the S box with 5-bit input/output are mixed to be used, but the explanation of the details is omitted.

The output of each of six S boxes 31 is given to MDS converting units 132a and 132b. Here, the MDS converting unit corresponds to the function P in the SPN structure that is explained in Figure 1E. In this sense, it can be said that the F function inside the Feistel structure has the SPN structure. A linear conversion layer having the biggest branch number functioning as one concept that defines the diffusion property of the data in the function P corresponds to the MDS converting unit. This branch number is a barometer that evaluates the strength to the differential attack or liner attack. The detail is explained in the above-mentioned article.

The outputs of MDS converting units 32a and 32b are given to XOR 33a and XOR 33b, respectively, and each of the exclusive OR is obtained. Regarding, for example, the output of 32 bits of the MDS converting unit 32a the logical product with Ox5555 5555 is obtained and then it is given to EXOR133b. The reason why such logical product is obtained is that the outputs of EXOR33a and EXOR33b become the same if the outputs of the MDS converting units 32a and 32b are given unchanged. The data of which the logical product is computed with the output of the MDS converting unit 32a is 010101 0101 (32 bits) in a binary number. Also the data of which the logical product is calculated with the output of the MDS converting unit 32b is 101010 1010 (32 bits).

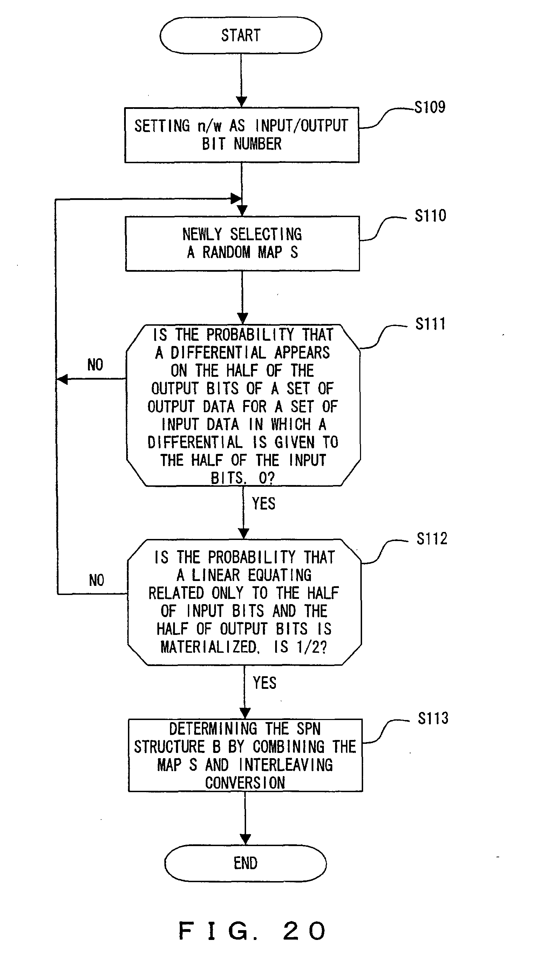

Figure 20 shows the detailed flowchart of step S104 of Figure 18, that is, the decision process of the SPN structure B. After the input/output bit number is obtained in step S109 when the process starts in this figure, a random map S is newly selected in step S110. This map S is the 1-1 map of r-bit input/output that is obtained by dividing a bit length n of the block that is input in step S101 of Figure 18 by a bit length w of the word that is input in step S103.

If for example, statement is such that the bit length n of the block of input data is 128 bits and the word length w is 32 bits, r is 4 bits, and a random map S with 4-bit input/output is selected.

It is determined in step S111 of Figure 20 whether the possibility that for a set of the input data in which a differential is given only at the half input bits fixed for the map S, for example 2 bits of 4 bits, a differential appears on a set of output data at the half output bits fixed at the same location is 0. In the case that the probability is not 0, the process returns to step S110, and processes in and after the selecting process of a new random map S are repeated.

When it is determined in step S111 that the probability is 0, it is determined in step S112 whether the probability that for an optional relational equation only related to the half input bits fixed for the map S and the half output bits fixed for the map S and located, for example, at the same location as the half input bits, the linear relation equation can be realized between all the input bits and output bits, is 1/2. If the probability is not 1/2, the processes in and after step S110 are repeated. The determination performed in steps S111 and S112 will be described later using Figures 21 and 22.

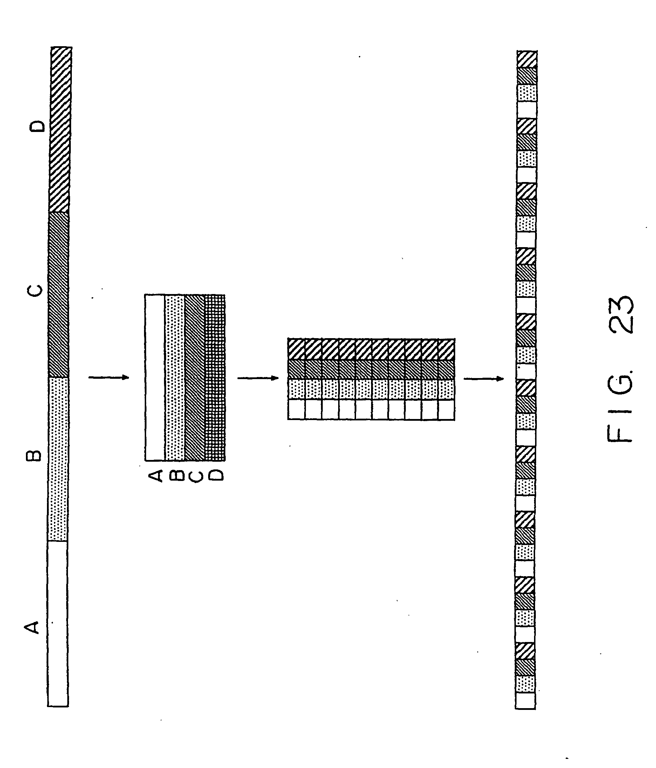

In the case that the probability is 1/2 in step S112, the map S and the interleaving conversion that will be described later, for example, in Figure 23, and that is stored in the input file 111 of Figure 15 are combined to determine the SPN structure B, thereby terminating the processes.

Figure 21 shows an example of the probability that is determined in step S111 of Figure 20. This example uses the function of S: (0, 1, 2, 3, 4, 5, 6, 7, 8, 9, 10, 11, 12, 13, 14, 15)
$\rightarrow$ (1,9,6,12,7,2,15,11,14,0,5,10,4,3,8,13) as a nonlinear S function while setting 4 bits as an/the input/output bit number. This example represents x of x/16 as the possibility of the appearance of output differential to the input differential. Furthermore it is indicated that in the input/output relationship of the nonlinear S function, 13 of the decimal number is output for 15 of the last decimal number, that is, 1101 is output to 1111 of the binary number.

It is shown in Figure 21 that for the top three columns where an input differential appears on the right half bits of 4 bits, the probability that an output differential appears on the half bits on the other side at the corresponding location, that is, the left three rows is 0. Further, it is shown that the probability that for a set of input data in which an input differential appears at the left half bits, that is, the bottom three columns, an output differential appears on the left half bits, that is, the probability of the right three rows is 0.

In Figure 21, it is confirmed by computation that as for the input/output data set with the input differential (0001) and with output data set (0100), there are only two sets such as the output set (1111), (1011) for the input set (0110), (0111), and the output set (1011), (1111) for the input set (0111), (0110).

Figure 22 shows an example of the probability that is determined in step S112 of Figure 20. This probability indicates the probability to the above-mentioned nonlinear S function. In other words, in respect of all the optional liner relational equations related only to one-side 2 input bits and one-side 2 out bits, this figure shows x that decides the probability (8-x) /16 to realize the linear relational equations among all the input/output bit data.

In Figure 22, since at three left rows of the three top columns, differentials respectively appear at the right-side 2 input bits and right-side 2 output bits, and the value of x indicating the possibility to be realized liner relational equation between the input/output data is 0, the possibility is 8/16, that is, 1/2.

Similarly, at three right rows of the bottom three columns, differentials respectively appear at the left-side 2 input bits and left-side 2 output bits. The possibility that the liner relational equation is realized among the input/output data is 1/2. Therefore, the fact that the possibility is 1/2 means that the liner relational equation is realized or not realized among the input/output data, so that the liner relational equation itself does not have any meaning.

When the value of a certain linear equation regarding an input/output bit is always 0 or 1, the linear equation can be realized between the input and output. In a cipher, the input/output is preferably apart from the linear relationship as much as possible. In this sense, the situation called realization probability of 1/2 is desirable.

The value of a liner equation $x_3+y_1$ that is related to input (0001) and output (0100) is checked while setting input as $(x_0, x_1, x_2, x_3)$ and the output as $(y_0, y_1, y_2, y_3)$. Since the output for the input 1=(0001) is 9= (0001), $x_3+y_1$ =1+0=1 is obtained. Similarly, the value of $x_3+y_1$ can be obtained among all the inputs and outputs.

In0, Out1→0
In1, Out9→1
In2, Out6→1
In3, Outc→0
In4, Out7→1
In5, Out2→1
In6, Outf→1
In7, Outb→1
In8, Oute→1
In9, Out0→1
Ina, Out5→1
Inb, Outa→1
Inc, Out4→1
Ind, Out3→1
Ine, Out8→0
Inf, Outd→0

The input/output relationship that realizes the linear equation of $x_3+y_1$ =1 is 12 according to this calculation. Since the probability is 12/16, the value of x that corresponds in Figure 22 becomes -4.

Figure 23 is an example of the interleaving conversion that is explained in Figure 17. In this figure, the input data, for example, the SPN structure is divided into four parts of A, B, C, and D. The divided data is converted to be four columns. Furthermore, the converted data of data A, data B, data C, and data D are arranged to be a row. Finally the first data of the data A, B, C, and D becomes the first part of the row and the second data becomes the second part of the row. and the process continues similarly. For example, the first part of A, B, C, and D, in other words, the data firstly arranged is input in the most-left S box 125 of Figure 4.

If for example, Data A is allocated to 32-bit variable X, B to Y, C to Z, D to W (32-bit variables, respectively), and $X=(X_0, x_1, ...x_{31})$, $Y=(y_0, y_1, ...y_{31})$, $Z=(z_0, z_1, ... z_{31})$, and $W=(w_0, w_1, ...w_{31})$ are set, the output of the interleaving conversion of Figure 23 becomes $(x_0, y_0, z_0, w_0, x_1, y_1, z_1, w_1, ...x_{31}, y_{31}, z_{31}, w_{31})$.

In this way in the present embodiment, by combining the nonlinear S function and interleaving conversion as linear conversion, the stirring performance of the input data is improved.

When an input differential is given to the one-side 2 bits of the input of the S box, for example, right-side 2 bits, as explained in Figures 21 and 22, the probability that an output differential appears on the right-side 2 bits is 0, and the probability that an output differential appears at the left-side 2 bits does not become 0. Therefore, the influence appears on the left-side of a set of the input data in which a differential is given to the half right-side. Accordingly, the stirring effect of data can be obtained.

In Figure 22, the realization probability of a linear relational equation related to only the input bit and output bit of the right-side 2 bits, is 1/2. In other words, there is not a meaning in the linear relational equation. On the other hand, concerning the liner relational equation only related to the right-side 2 bits and left-side 2 bits, a linear equation having the probability that is bigger than 1/2 definitely exists . Therefore, the stirring effect of data can be obtained using the linear relational equation that relates to the right-side 2 bits and the left-side 2 bits.

As mentioned above, by combining the Feistel structure having the excellent stirring and diffusing performance of data in words and the SPN structure having the excellent stirring performance of data between words, the high-speed computation performance, and the asymmetrical property concerning the input and output, the present invention can perform high-speed encryption computation and also can enhance the safety of the cipher. Further, the data stirring performance is enhanced by using a map in which the stirring of data is not inclined toward one side of data, as a nonlinear function of the S block in the SPN structure . At the same time, the stirring performance of data between words can be further enhanced by using the interleaving conversion, which contributes to the improvement of the performance of a common key block cipher.

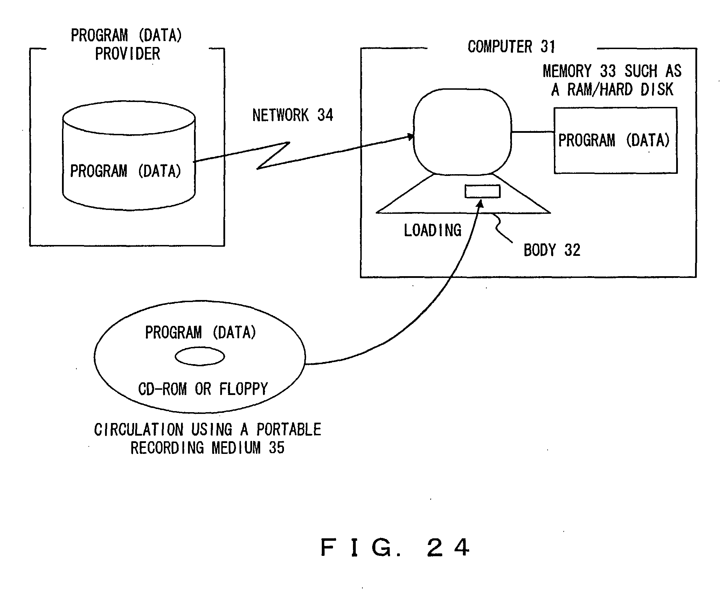

Figure 24 is an explanatory diagram of a process of loading the program that realizes the present invention, into the computer. The encrypting apparatus functioning as the embodiment of the present invention, such as a system, etc., that are shown in, for example, Figures 2B and 15 can be configured as a general computer system.

Figure 24 shows the configuration of such a system. A computer 31 is composed of a main body 32 and a memory 33. The memory 33 is a recording apparatus such as a random access memory (RAM), a hard disk, magnetic disk, or the like. The programs described in claims 14 and 23 of the present invention, the programs explained in Figures 4 to 6, 18, and 20 and the others are stored in the memory 33. By executing the program by the main body 32, the pseudo MDS matrix of the present invention is obtained and the input data is encrypted.

The program that realizes the present invention can be realized by loading a program into the computer 31 through a network 34 from a program provider or by loading a program that is stored in a portable recording medium 35 that is put into market and circulating in the market, into the computer 31. As the portable recording medium 35, a recording medium of various types including a floppy disk, a CD-ROM, an optical disk, an optomagnetic disk, etc. can be used. The above-mentioned programs, etc. are stored in such a recording medium. By being loaded into the computer 31, a pseudo MDS matrix in the present embodiment is formed, and the code-message to the input data can be formed using the matrix.

## Claims

1. A computing apparatus(1) using SPN structure having a plurality of S boxes and a linear converting unit in an F function, comprising:

   set of bit numbers inputting means (2) for receiving an input of a set $T=\{t_1, t_2, t_3 ... t_r\}$ of bit numbers obtained by unequally dividing all bit numbers of input data to be given to the computing apparatus(1); and
   value indicating existence probability of linear converting unit outputting means(3) for outputting a value $A_T$ indicating an existence probability of an appropriate linear converting unit corresponding to a plurality of S boxes of which input and output bit numbers are equivalent to the divided bit numbers.

2. The computing apparatus(1) according to claim 1, wherein said value indicating existence probability of linear converting unit outputting means(3) comprises a minimum value determining means for obtaining a minimum value $u_k(k=1, 2, ..., r)$ of a sum of elements of a set formed by selecting optional k elements from elements of the set T, and a maximum value determining means for obtaining a maximum value $v_k(k=1, 2, 3, ..., r)$ of a sum of elements of a set formed by selecting optional k elements from elements of the set T, wherein

   a value obtained by subtracting a maximum value of k' that satisfies $u_k \geqq v_{k'}$ ($k'=0, 1, ..., r, v_0=0$) for a value k, from k is set as $w_k(k=1, 2, ..., r)$, and the value $A_T$ is obtained by subtracting a maximum value of $w_k$ from a value of (r+1).

3. The computing apparatus(1) according to claim 1, further comprising:

   a linear converting unit existence determining means (4) for determining whether **the value** $A_T$ is positive, and determining that the appropriate linear converting unit is present when the value is positive.

4. The computing apparatus (1) according to claim 2, further comprising:

   a linear converting unit existence determining means (4) for determining whether the value $A_T$ is positive, and determining that the appropriate linear converting unit is present when the value is positive.

5. The computing apparatus(1) according to claim 3, further comprising:

   a pseudo MDS matrix forming means (5) for forming as the linear converting unit, a pseudo MDS matrix corresponding to an MDS matrix in a case where the bits are unequally divided when it is determined that the linear converting unit is present.

6. The computing apparatus(1) according to claim 4, further comprising:

   a pseudo MDS matrix forming means (5) for forming as the linear converting unit, a pseudo MDS matrix corresponding to an MDS matrix in a case where the bits are unequally divided when it is determined that the linear converting unit is present.

7. The computing apparatus(1) according to claim 5, wherein the pseudo MDS matrix forming means(5) sets a matrix M of r columns and r rows to $M=(M_{ij})$ ($i=1, 2, ..., r, j=1, 2, ..., r$) while setting as an element a partial matrix $M_{ij}$ of $t_i$ columns and $t_j$ rows of which an element is 0 or 1, obtains $c(e)=e+r-A_T+1$ for each positive number from e=1 to $(A_T-1)$, obtains a set $T_1=\{t_{i1}, t_{i2}, ..., t_{ie}\}$ formed by optionally selecting e elements from elements of the set T and a set $T_2=\{t_{j1}, t_{j2}, ..., t_{jc(e)}\}$ formed by optionally selecting c(e) elements from elements of the set T, and obtains a matrix M such that a value of a small matrix of an optional matrix M corresponding to the set $(T_1, T_2)$ and a value of a rank of a small matrix of an optional matrix M corresponding to the set $(T_2, T_1)$ is equal to either a column number of a small matrix of the matrix M or a number of ranks of a small matrix of a matrix M.

8. The computing apparatus(1) according to claim 5, wherein the pseudo MDS matrix forming means(5) sets a matrix M of r columns and r rows to $M=(M_{ij})$ ($i=1, 2, ..., r, j=1, 2, ..., r$) while setting as an element a partial matrix $M_{ij}$ of $t_i$ columns and $t_j$ rows of which an element is 0 or 1, obtains $c(e)=e+r-A_T+1$ for each positive number from e=1 to $(A_T-1)$, obtains a set $T_1=\{t_{i1}, t_{i2}, ..., t_{ie}\}$ formed by optionally selecting e elements from elements of the set T and a set $T_2=\{t_{j1}, t_{j2}, ..., t_{jc(e)}\}$ formed by optionally selecting c(e) elements from elements of the set T, and obtains a matrix M such that a value of a small matrix of an optional matrix M corresponding to the set $(T_1, T_2)$ and a value of a rank of a small matrix of an optional matrix M corresponding to the set $(T_2, T_1)$ is equal to either a column number of a small matrix of the matrix M or a number of ranks of a small matrix of a matrix M.

9. The computing apparatus (1) according to claim 7, wherein a small matrix corresponding to the sets $(T_1, T_2)$ is configured by a partial matrix designated by columns respectively corresponding to the $t_{i1}$, $t_{i2}$, ..., $t_{ie}$ and rows respectively corresponding to the $t_{j1}$, $t_{j2}$, ..., $t_{jc(e)}$, among partial matrixes $M_{ij}$ that function as elements of the r columns and r rows to configure the matrix $M=(M_{ij})$.

10. The computing apparatus (1) according to claim 8, wherein a small matrix corresponding to the sets $(T_1, T_2)$ is configured by a partial matrix designated by columns respectively corresponding to the $t_{i1}$, $t_{i2}$, ..., $t_{ie}$ and rows respectively corresponding to the $t_{j1}$, $t_{j2}$, ..., $t_{jc(e)}$, among partial matrixes $M_{ij}$ that function as elements of the r columns and r rows to configure the matrix $M=(M_{ij})$.

11. A computation method using SPN structure having a plurality of S boxes and a linear converting unit in an F function, comprising:

receiving an input of a set $T=\{t_1, t_2, t_3 ... t_r\}$ of bit numbers obtained by unequally dividing all bit numbers of input data to be given; and outputting a value $A_T$ indicating an existence probability of an appropriate linear converting unit corresponding to a plurality of S boxes of which input and output bit numbers are equivalent to the divided bit numbers.

12. The computation method using SPN structure having an F function according to claim 11, comprising:

determining whether the vale AT is positive or not; and determining that the appropriate linear converting unit is present when the value is positive.

13. The computation method according to claim 12, wherein a pseudo MDS matrix corresponding to an MDS matrix in a case where the bits are equally divided is formed as the linear converting unit.

14. A computer-readable portable recording medium used by a computer executing a computation process using SPN structure having a plurality of S boxes and a linear converting unit in an F function, storing a program for causing the computer to perform a process, comprising the steps of:

receiving an input of a set $T=\{t_1, t_2, t_3, ... t_r\}$ of bit numbers obtained by unequally dividing all bit numbers of input data to be given; and outputting a value AT indicating an existence probability of an appropriate linear converting unit corresponding to a plurality of S boxes of which input and output bit numbers are equivalent to the divided bit numbers.

15. A computing apparatus(101) in which Feistel structure and SPN structure are combined, for receiving a data input, and setting a computation result for the data input as a data output, comprising:

at least one first data converting means (102) for performing data conversion using the Feistel structure; and at least one second data converting means (103) for performing data conversion using the SPN structure,

wherein said first data converting means (102) and said second data converting means (103) are continuously combined between the data input and the data output.

16. The computing apparatus(101) according to claim 15, wherein the SPN structure comprises a nonlinear converting unit having an input/output bit number obtained by dividing a block length of one block of the data input by a word length, and a linear converting unit that uses interleaving conversion.

17. The computing apparatus(101) according to claim 15, comprising:

a nonlinear converting unit having a probability 0 that for a set of input data in which a differential appears only on at least one fixed input bit among input bits to the nonlinear converting unit, a differential appears for a set of output data in which a differential appears on at least one fixed output bits located at the same location as at least one fixed input bits, and further a probability 1/2 that an optional linear relational equation only related to at least one fixed input bits and at least one fixed output bits, realizes between all the input data and output data 1/2, is provided, as a nonlinear converting unit configuring the SPN structure.

18. The computing apparatus(101) according to claim 16, comprising:

a nonlinear converting unit having a probability 0 that for a set of input data in which a differential appears only on at least one fixed input bit among input bits to the nonlinear converting unit, a differential appears for a set of output data in which a differential appears on at least one fixed output bits located at the same location as at least one fixed input bits, and further a probability 1/2 that an optional linear relational equation only related to at least one fixed input bits and at least one fixed output bits, realizes between all the input data and output data 1/2, is provided, as a nonlinear converting unit configuring the SPN structure.

19. A computation method in which Feistel structure and SPN structure are combined, receiving a data input and setting a computation result for the data input as a data output, wherein

   at least one piece of first data conversion that performs data conversion using the Feistel structure and at least one piece of second data conversion that performs data conversion using the SPN structure are combined to be executed between the data input and the data output.

20. The computation method in which the Feistel structure and the SPN structure are combined according to claim 19, wherein

   in first data conversion using the SPN structure, nonlinear conversion of which a number of input bits and a number of output bits are equivalent to a value obtained by dividing a block length of one block of a data input by a word length, and
   liner conversion that uses interleaving conversion, are executed.

21. The computingmethod in which the Feistel structure and the SPN structure are combined according to claim 19, wherein

   nonlinear conversion having a probability 0 that for a set of input data in which a differential appears only on at least one fixed input bit among input bits to be used for the nonlinear conversion, a differential appears for a set of output data in which a differential appears on at least one fixed output bits located at the same location as the at least one fixed input bits, and further having a probability 1/2 that an optional linear relational equation only related to the at least one fixed input bits and the at least one fixed output bits is realized between all the input data and output data, is executed as nonlinear conversion to be executed in the SPN structure.

22. The computingmethod in which the Feistel structure and the SPN structure are combined according to claim 20, wherein

   nonlinear conversion having a probability 0 that for a set of input data in which a differential appears only on at least one fixed input bit among input bits to be used for the nonlinear conversion, a differential appears for a set of output data in which a differential appears on at least one fixed output bits located at the same location as the at least one fixed input bits, and further having a probability 1/2 that an optional linear relational equation only related to the at least one fixed input bits and the at least one fixed output bits is realized between all the input data and output data, is executed as nonlinear conversion to be executed in the SPN structure.

23. A portable computer-readable recording medium being used for a computer that executes computation of receiving data input and that sets a computation result for the input data as a data output, and storing a program causing the computer to perform a process, comprising:

   combining and executing at least one piece of first data conversion that performs data conversion using Feistel structure; and at least one piece of second data conversion that performs data conversion using SPN structure between the data input and the data output.

FIG. 1A

FIG. 1B

FIG. 1C

$$\left(\begin{array}{cccc} a_{11} & a_{12} & a_{13} & a_{14} \\ a_{21} & a_{22} & a_{23} & a_{24} \\ a_{31} & a_{32} & a_{33} & a_{34} \\ a_{41} & a_{42} & a_{43} & a_{44} \end{array}\right)$$

32 BITS

32 BITS

F I G.  1 D

INPUT

128

64                                              64

151

64    F    FUNCTION    64

152

128

OUTPUT

# FIG. 1E

S : NON-LINEAR CONVERSION, P : LINEAR CONVERSION

F I G. 1 F

COMPUTING APPARATUS 1

SET OF BIT NUMBERS INPUTTING UNIT 2

VALUE INDICATING EXISTENCE PROBABILITY OF LINEAR CONVERTING UNIT OUTPUTTING UNIT 3

LINEAR CONVERTING UNIT EXISTENCE DETERMINING UNIT 4

PSEUDO MDS MATRIX FORMING UNIT 5

F I G. 2 A

PROCESSOR  _10

$A_T$ CALCULATING UNIT  _15

LINEAR CONVERTING UNIT
EXISTENCE DETERMINING
UNIT  _16

PSEUDO MDS MATRIX
FORMING UNIT  _17

CRYPTOGRAPHY FORMING
UNIT  _18

_13
DISPLAY
APPARATUS

_14
INPUT/OUTPUT
APPARATUS

_11
INPUT FILE

STATEMENT
INPUT BIT
NUMBER n
SET T OF BIT
NUMBERS

_12
OUTPUT FILE

VALUE OF $A_T$
PSEUDO MDS
MATRIX
ENCRYPTION
ALGORITHM

F I G. 2 B

32 ——————————— INPUTTING UNIT

——— BIT DIVIDING UNIT

NON-LINEAR
——— CONVERTING UNIT
( S- box )

BIT
——— SYNCHRONIZING
UNIT

32

LINEAR
——— CONVERTING UNIT

32 ——————————— OUTPUTTING UNIT

21 — [S] [S] [S] [S] [S] [S]

22 — [P]

FIG. 3

START

CALCULATING THE MAXIMUM VALUE
$A_T$ OF THE NUMBER OF ACTIVE S
BOXES — S1

IS LINEAR CONVERSION
PRESENT? — S2

NO

YES

FORMING A MATRIX MATERIALIZING
LINEAR CONVERSION — S3

OUTPUTTING AN
ERROR MESSAGE — S6

FORMING ENCRYPTION ALGORITHM — S4

FORMING CRYPTOGRAPHY — S5

END

F I G. 4

START

INPUTTING A SET T OF BIT NUMBERS    S10

CALCULATING THE MINIMUM VALUE $U_k$ OF SUM    S11

CALCULATING THE MAXIMUM VALUE $V_k$ OF SUM    S12

CALCULATING $W_k$    S13

CALCULATING $A_T$    S14

END

F I G.  5

START

NEWLY SELECTING A MATRIX M AT RANDOM — S20

$e=1$ — S21

S22 — $e > A_T - 1$?

YES — S33 — OUTPUTTING THE MATRIX M

END

NO

OBTAINING A VALUE $c(e)$ — S23

S32 — $e \leftarrow e+1$

NEWLY SELECTING A SET $T_1$ OF $e$ ELEMENTS — S24

S25 — IS THE SET $T_1$ SELECTED? — NO

YES

NEWLY SELECTING A SET $T_2$ OF $c(e)$ ELEMENTS — S26

S27 — IS THE SET $T_2$ SELECTED? — NO

YES

OBTAINING THE RANK OF A SMALL MATRIX CORRESPONDING TO $T_1$ AND $T_2$ — S28

S29 — IS THE VALUE OF THE RANK EQUAL TO THE NUMBER OF COLUMNS OR THE NUMBER OF ROWS? — NO

YES

OBTAINING THE RANK OF A SMALL MATRIX CORRESPONDING TO $T_2$ AND $T_1$ — S30

S31 — IS THE VALUE OF THE RANK EQUAL TO THE NUMBER OF COLUMNS OR THE NUMBER OF ROWS? — NO

YES

F I G. 6

$$
M =
\begin{pmatrix}
111111 & 11011 & 11101 & 10110 & 01010 & 001100 \\
111011 & 10011 & 11111 & 01001 & 10100 & 011000 \\
010011 & 00011 & 11011 & 10010 & 01101 & 110101 \\
000011 & 00110 & 10011 & 00001 & 11010 & 001111 \\
000110 & 01100 & 00011 & 00010 & 10001 & 111110 \\
110100 & 00110 & 10000 & 10000 & 00000 & 110000 \\
\hline
001110 & 10101 & 01011 & 01000 & 11010 & 100100 \\
011100 & 01111 & 10110 & 10000 & 10001 & 001000 \\
011101 & 11110 & 01001 & 00101 & 00111 & 010000 \\
011111 & 11001 & 10010 & 01010 & 01110 & 000101 \\
011011 & 10111 & 00001 & 10100 & 11100 & 101010 \\
\hline
111000 & 11110 & 11001 & 01101 & 10001 & 110011 \\
010101 & 11001 & 10111 & 11010 & 00111 & 000011 \\
101111 & 10111 & 01011 & 10001 & 01110 & 000110 \\
111110 & 01011 & 10110 & 00111 & 11100 & 001100 \\
111001 & 10110 & 01001 & 01110 & 11101 & 011000 \\
\hline
100110 & 00100 & 01111 & 11011 & 11001 & 100101 \\
001100 & 01000 & 11110 & 10011 & 10111 & 101010 \\
111000 & 10000 & 11001 & 00011 & 01011 & 110100 \\
010101 & 00101 & 10111 & 00110 & 10110 & 001101 \\
001111 & 01010 & 01011 & 01100 & 01001 & 011010 \\
\hline
011101 & 11001 & 01001 & 11110 & 11000 & 110110 \\
111111 & 10111 & 10010 & 11001 & 10101 & 001001 \\
011011 & 01011 & 00001 & 10111 & 01111 & 010010 \\
110011 & 10110 & 00010 & 01011 & 11110 & 000001 \\
100011 & 01001 & 00100 & 10110 & 11001 & 000010 \\
\hline
111010 & 11111 & 11011 & 00100 & 01000 & 100010 \\
010001 & 11011 & 10011 & 01000 & 10000 & 100100 \\
100111 & 10011 & 00011 & 10000 & 00101 & 101000 \\
101110 & 00011 & 00110 & 00101 & 01010 & 010000 \\
111100 & 00110 & 01100 & 01010 & 10100 & 100000 \\
110001 & 11100 & 00110 & 11110 & 01001 & 111100
\end{pmatrix}
$$

FIG. 7

$$M = \begin{array}{cccccc} 6 & 5 & 5 & 5 & 5 & 6 \\ \end{array}$$

$$M = \left( \begin{array}{cccccc} M_{11} & M_{12} & M_{13} & M_{14} & M_{15} & M_{16} \\ M_{21} & M_{22} & M_{23} & M_{24} & M_{25} & M_{26} \\ M_{31} & M_{32} & M_{33} & M_{34} & M_{35} & M_{36} \\ M_{41} & M_{42} & M_{43} & M_{44} & M_{45} & M_{46} \\ M_{51} & M_{52} & M_{53} & M_{54} & M_{55} & M_{56} \\ M_{61} & M_{62} & M_{63} & M_{64} & M_{65} & M_{66} \end{array} \right) \begin{array}{c} 6 \\ 5 \\ 5 \\ 5 \\ 5 \\ 6 \end{array} \Rightarrow \left( \begin{array}{cccc} M_{22} & M_{23} & M_{25} & M_{26} \\ M_{32} & M_{33} & M_{35} & M_{36} \\ M_{62} & M_{63} & M_{65} & M_{66} \end{array} \right)$$

## F I G. 8A

$$\begin{array}{cccccc} 6 & 5 & 5 & 5 & 5 & 6 \\ \end{array}$$

$$M = \left( \begin{array}{cccccc} M_{11} & M_{12} & M_{13} & M_{14} & M_{15} & M_{16} \\ M_{21} & M_{22} & M_{23} & M_{24} & M_{25} & M_{26} \\ M_{31} & M_{32} & M_{33} & M_{34} & M_{35} & M_{36} \\ M_{41} & M_{42} & M_{43} & M_{44} & M_{45} & M_{46} \\ M_{51} & M_{52} & M_{53} & M_{54} & M_{55} & M_{56} \\ M_{61} & M_{62} & M_{63} & M_{64} & M_{65} & M_{66} \end{array} \right) \begin{array}{c} 6 \\ 5 \\ 5 \\ 5 \\ 5 \\ 6 \end{array} \Rightarrow \left( \begin{array}{ccc} M_{22} & M_{23} & M_{26} \\ M_{32} & M_{33} & M_{36} \\ M_{52} & M_{53} & M_{56} \\ M_{62} & M_{63} & M_{66} \end{array} \right)$$

## F I G. 8B

$$\left( \begin{array}{cccccc|cccccc} 1 & 1 & 1 & 1 & 1 & 1 & 1 & 1 & 0 & 1 & 1 \\ 1 & 1 & 1 & 0 & 1 & 1 & 1 & 0 & 0 & 1 & 1 \\ 0 & 1 & 0 & 0 & 1 & 1 & 0 & 0 & 0 & 1 & 1 \\ 0 & 0 & 0 & 0 & 1 & 1 & 0 & 0 & 1 & 1 & 0 \\ 0 & 0 & 0 & 1 & 1 & 0 & 0 & 1 & 1 & 0 & 0 \\ 1 & 1 & 0 & 1 & 0 & 0 & 0 & 0 & 1 & 1 & 0 \end{array} \right)$$

# F I G. 9

$$\begin{pmatrix} 1 & 1 & 1 & 1 & 1 & 1 \\ 1 & 1 & 1 & 0 & 1 & 1 \\ 0 & 1 & 0 & 0 & 1 & 1 \\ 0 & 0 & 0 & 0 & 1 & 1 \\ 0 & 0 & 0 & 1 & 1 & 0 \\ 1 & 1 & 0 & 1 & 0 & 0 \\ \hline 0 & 0 & 1 & 1 & 1 & 0 \\ 0 & 1 & 1 & 1 & 0 & 0 \\ 0 & 1 & 1 & 1 & 0 & 1 \\ 0 & 1 & 1 & 1 & 1 & 1 \\ 0 & 1 & 1 & 0 & 1 & 1 \end{pmatrix}$$

F I G. 1 0

```
0 : matrix[5,5]=        8 : matrix[5,5]=
00000                   01000
00000                   10000
00000                   00101
00000                   01010
00000                   10100
0                       1
1 : matrix[5,5]=        9 : matrix[5,5]=
00001                   01001
00010                   10010
00100                   00001
01000                   00010
10000                   00100
1                       1
2 : matrix[5,5]=        10 : matrix[5,5]=
00010                   01010
00100                   10100
01000                   01101
10000                   11010
00101                   10001
1                       1
3 : matrix[5,5]=        11 : matrix[5,5]=
00011                   01011
00110                   10110
01100                   01001
11000                   10010
10101                   00001
1                       1
4 : matrix[5,5]=        12 : matrix[5,5]=
00100                   01100
01000                   11000
10000                   10101
00101                   01111
01010                   11110
1                       1
5 : matrix[5,5]=        13 : matrix[5,5]=
00101                   01101
01010                   11010
10100                   10001
01101                   00111
11010                   01110
1                       1
6 : matrix[5,5]=        14 : matrix[5,5]=
00110                   01110
01100                   11100
11000                   11101
10101                   11111
01111                   11011
1                       1
7 : matrix[5,5]=        15 : matrix[5,5]=
00111                   01111
01110                   11110
11100                   11001
11101                   10111
11111                   01011
1                       1
```

FIG. 11

```
16 : matrix[5,5]=    24 : matrix[5,5]=
10000                11000
00101                10101
01010                01111
10100                11110
01101                11001
1                    1
17 : matrix[5,5]=    25 : matrix[5,5]=
10001                11001
00111                10111
01110                01011
11100                10110
11101                01001
1                    1
18 : matrix[5,5]=    26 : matrix[5,5]=
10010                11010
00001                10001
00010                00111
00100                01110
01000                11100
1                    1
19 : matrix[5,5]=    27 : matrix[5,5]=
10011                11011
00011                10011
00110                00011
01100                00110
11000                01100
1                    1
20 : matrix[5,5]=    28 : matrix[5,5]=
10100                11100
01101                11101
11010                11111
10001                11011
00111                10011
1                    1
21 : matrix[5,5]=    29 : matrix[5,5]=
10101                11101
01111                11111
11110                11011
11001                10011
10111                00011
1                    1
22 : matrix[5,5]=    30 : matrix[5,5]=
10110                11110
01001                11001
10010                10111
00001                01011
00010                10110
1                    1
23 : matrix[5,5]=    31 : matrix[5,5]=
10111                11111
01011                11011
10110                10011
01001                00011
10010                00110
1                    1
```

F I G. 12

$$\begin{pmatrix} 31 & 27 & 29 & 22 & 10 & 12 \\ 14 & 21 & 11 & 8 & 26 & 4 \\ 24 & 30 & 25 & 13 & 17 & 19 \\ 6 & 4 & 15 & 27 & 25 & 5 \\ 29 & 25 & 9 & 30 & 24 & 22 \\ 26 & 31 & 27 & 4 & 8 & 2 \end{pmatrix}$$

# F I G. 1 3

INPUTTING DATA

101

COMPUTING APPARATUS

FIRST DATA CONVERTING UNIT — 102

SECOND DATA CONVERTING UNIT — 103

OUTPUTTING DATA

F I G. 1 4 A

INPUTTING DATA

101

COMPUTING APPARATUS

SECOND DATA CONVERTING UNIT — 103

FIRST DATA CONVERTING UNIT — 102

OUTPUTTING DATA

F I G. 1 4 B

INPUTTING DATA

101

COMPUTING APPARATUS

FIRST DATA CONVERTING UNIT — 102

FIRST DATA CONVERTING UNIT — 102

SECOND DATA CONVERTING UNIT — 103

OUTPUTTING DATA

F I G. 1 4 C

INPUTTING DATA

101

COMPUTING APPARATUS

SECOND DATA CONVERTING UNIT — 103

FIRST DATA CONVERTING UNIT — 102

FIRST DATA CONVERTING UNIT — 102

OUTPUTTING DATA

F I G. 1 4 D

110

PROCESSOR

| Feistel STRUCTURE DETERMINING UNIT | 116 |
| --- | --- |

| SPN STRUCTURE DETERMINING UNIT | 117 |
| --- | --- |

| ENCRYPTION ALGORITHM DETERMINING UNIT | 118 |
| --- | --- |

| CRYPTOGRAPHY FORMING UNIT | 119 |
| --- | --- |

| DISPLAY APPARATUS | 113 |
| --- | --- |

| INPUT/OUTPUT APPARATUS | 114 |
| --- | --- |

INPUT FILE

STATEMENT
BLOCK LENGTH n
WORD LENGTH w
INTERLEAVING
CONVERSION

111

OUTPUT FILE

F FUNCTION
MAP S
ENCRYPTION
ALGORITHM

112

F I G. 1 5

F I G. 16

INPUT

LEFT        RIGHT

123 : SPN   STRUCTURE
124 : INTERLEAVING   CONVERSION
125 : S   BOX
126 : INTERLEAVING   REVERSE—CONVERSION

OUTPUT

# F I G.   1 7

START

INPUTTING A BIT LENGTH n OF A DATA BLOCK — S101

DETERMINING A Feistel STRUCTURE R — S102

INPUTTING A WORD BIT LENGTH w — S103

DETERMINING AN SPN STRUCTURE B — S104

DETERMINING ENCRYPTION ALGORITHM — S105

FORMING CRYPTOGRAPHY — S106

END

F I G. 1 8

INPUT

64

32                                    32

Key 1 → ⊕ 130a        130b ⊕ ← Key 2

6  5  5  5  5  6        6  5  5  5  5  6

131  $S_6$ $S_5$ $S_5$ $S_5$ $S_5$ $S_6$   $S_6$ $S_5$ $S_5$ $S_5$ $S_5$ $S_6$  131

6  5  5  5  5  6        6  5  5  5  5  6

132a  MDS  CONVERTING  UNIT     MDS  CONVERTING  UNIT  132b

32                                    32

0x55555555              0xaaaaaaaa
∧                        ∧
(and)                    (and)

133a  ⊕              ⊕  133b

64

OUTPUT

# FIG. 19

START

SETTING n/w AS INPUT/OUTPUT BIT NUMBER — S109

NEWLY SELECTING A RANDOM MAP S — S110

IS THE PROBABILITY THAT A DIFFERENTIAL APPEARS ON THE HALF OF THE OUTPUT BITS OF A SET OF OUTPUT DATA FOR A SET OF INPUT DATA IN WHICH A DIFFERENTIAL IS GIVEN TO THE HALF OF THE INPUT BITS, 0? — S111

NO

YES

IS THE PROBABILITY THAT A LINEAR EQUATING RELATED ONLY TO THE HALF OF INPUT BITS AND THE HALF OF OUTPUT BITS IS MATERIALIZED, IS 1/2? — S112

NO

YES

DETERMINING THE SPN STRUCTURE B BY COMBINING THE MAP S AND INTERLEAVING CONVERSION — S113

END

F I G.   2 0

| INPUT DIFFERENTIAL | OUTPUT DIFFERENTIAL | | | | | |
|---|---|---|---|---|---|---|
| | (0001) | (0010) | (0011) | (0100) | (1000) | (1100) |
| (0001) | 0 | 0 | 0 | 2 | 2 | 0 |
| (0010) | 0 | 0 | 0 | 0 | 2 | 2 |
| (0011) | 0 | 0 | 0 | 2 | 0 | 2 |
| (0100) | 0 | 0 | 2 | 0 | 0 | 0 |
| (1000) | 2 | 0 | 4 | 0 | 0 | 0 |
| (1100) | 4 | 2 | 0 | 0 | 0 | 0 |

# FIG. 21

| INPUT BIT | OUTPUT BIT | | | | | |
|---|---|---|---|---|---|---|
| | (0001) | (0010) | (0011) | (0100) | (1000) | (1100) |
| (0001) | 0 | 0 | 0 | -4 | 2 | -2 |
| (0010) | 0 | 0 | 0 | 2 | 4 | 2 |
| (0011) | 0 | 0 | 0 | -2 | -2 | 0 |
| (0100) | 2 | 2 | -4 | 0 | 0 | 0 |
| (1000) | -2 | -2 | 0 | 0 | 0 | 0 |
| (1100) | 0 | 4 | 0 | 0 | 0 | 0 |

FIG. 22

F I G. 23

EP 1 172 963 A2

EP 1 172 963 A2

PROGRAM (DATA)
PROVIDER

PROGRAM (DATA)

NETWORK 34

COMPUTER 31

MEMORY 33 SUCH AS
A RAM/HARD DISK

PROGRAM (DATA)

LOADING

BODY 32

PROGRAM (DATA)

CD-ROM OR FLOPPY

CIRCULATION USING A PORTABLE
RECORDING MEDIUM 35

F I G.  2 4